(19) **Europäisches Patentamt European Patent Office Office européen des brevets**

(11) **EP 4 753 097 A1**

(12) **EUROPEAN PATENT APPLICATION**

(43) Date of publication:
03.06.2026 Bulletin 2026/23

(21) Application number: 25216995.8

(22) Date of filing: 19.11.2025

(51) International Patent Classification (IPC):
H02J 3/38 (2026.01)    H02M 1/00 (2006.01)

(52) Cooperative Patent Classification (CPC):
H02J 3/381; H02J 2101/24; H02J 2101/25;
H02M 1/007; H02M 1/0074; H02M 1/0083

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 19.11.2024 US 202463722250 P
10.02.2025 US 202563756767 P

(71) Applicant: Solaredge Technologies Ltd.
Herzeliya 4673335 (IL)

(72) Inventors:
• YOSCOVICH, Ilan
4673335 Herzeliya (IL)
• LOEWENSTERN, Yakir
4673335 Herzeliya (IL)
• KHANANASHVILI, Shimon
4673335 Herzeliya (IL)
• SHKOURY, Roy
4673335 Herzeliya (IL)
• RABINER, Yacov
4673335 Herzeliya (IL)

(74) Representative: V.O.
P.O. Box 87930
2508 DH Den Haag (NL)

(54) **SYSTEMS, METHODS, AND APPARATUSES FOR POWER CONVERSION**

(57) Systems, methods, and apparatuses for power conversion are described. A power device may include a plurality of power converter circuitries. An individual power converter circuitry may connect input terminals, configured to be connected to a corresponding power source, with output terminals. The plurality of power converter circuitries may be configured to be controlled individually or collectively to convert power from the power sources. A controller may control each power converter circuitry, for example, to convert input power from a corresponding photovoltaic generator to a desired output power.

**EP 4 753 097 A1**

## Description

### FIELD OF THE DISCLOSURE

The disclosure relates generally to photovoltaic generators and power converters.

### BACKGROUND OF THE DISCLOSURE

Power converters may include converter circuitries used to convert power from a source to a load. Such power converters circuitries may be direct current (DC) to DC (DC-DC) converter circuitries, DC to alternating current (DC-to-AC) converter circuitries, AC-to-DC converter circuitries or AC-AC converter circuitries. A plurality of converter circuitries may be included in a power converter and used to convert power. For example, voltage step-up (e.g., boost) DC-DC converter circuitry may be used to increase a first DC voltage of a first power input from a DC power source to a second power at the output of the DC-DC converter circuitry. The second power at the output of the DC-DC converter circuitry may be input to DC-to-AC converter circuitry which converts the second power with boosted DC voltage to a third power with AC voltage.

### RELATED APPLICATIONS

The present application claims priority to U.S. Provisional Application 63/722,250 filed November 19, 2024, and U.S. Provisional Application 63/756,767 filed February 10, 2025.

### BRIEF SUMMARY OF THE DISCLOSURE

The following presents a simplified summary of the disclosure in order to provide a basic understanding of some aspects of the disclosure. This summary is not an extensive overview of the disclosure. It is not intended to identify key or critical elements of the disclosure or to delineate the scope of the disclosure. The following summary merely presents some concepts of the disclosure in a simplified form as a prelude to the more detailed description provided below.

The disclosure herein may relate to a power device which may include a plurality of power converter circuitries. According to an aspect of the disclosure herein, the plurality of power devices may be housed within a single enclosure. Housing the plurality of power devices within a single enclosure may provide flexibility in configuring the power devices in various ways. An aspect of the disclosure provides a power device for converting power using a plurality of power converter circuitries. The power converter circuitries may be configured and controlled individually or collectively to convert power. For example, when a plurality of power converter circuitries are individually controlled, each power converter circuitry may be coupled to a corresponding power source. One or more controllers may control each power converter circuitry (e.g., individually) to convert power from the corresponding power source. In some cases, a plurality of power converter circuitries may be coupled to a single power source. One or more controllers may control the power converter circuitries to collectively convert power from the single power source. An aspect of the disclosure herein provides an apparatus or system for converting power using a plurality of power converter circuitries. One of more of the power converter circuitries may be bidirectional power converter circuitries.

Bidirectional power converter circuitries may be selectively connected to one or more energy storage devices or to one or more power sources (e.g., photovoltaic generators), thus providing flexibility in system design. Including power converter circuitries that enable connection of additional power generators or connection of one or more energy storage devices, and providing a controller configured to operate the power converter circuitries according to a plurality of modes of operation (e.g. photovoltaic mode, battery mode, etc.) may increase system design possibilities according to system requirements or preferences. For example, a system planner may choose to install an increased number of power sources, or a reduced number of power sources, combined with one or more energy storage devices, to deliver a fixed or substantially fixed peak output AC power.

### BRIEF DESCRIPTION OF THE DRAWINGS

A more complete understanding of the present disclosure and the advantages thereof may be acquired by referring to the following description in consideration of the accompanying drawings, in which like reference numbers indicate like features, and wherein:

Fig. 1A shows an apparatus according to the disclosure herein;

Fig. 1B shows an apparatus according to the disclosure herein;

Fig. 1C shows an apparatus according to the disclosure herein;

Fig. 2A shows an apparatus according to the disclosure herein;

Fig. 2B shows an apparatus according to the disclosure herein;

Fig. 2C shows an apparatus according to the disclosure herein;

Fig. 3A shows an apparatus according to the disclosure herein;

Fig. 3B shows an apparatus according to the disclosure herein;

Fig. 4A shows a plurality of interconnected apparatuses according to the disclosure herein;

Fig. 4B shows a plurality of interconnected apparatuses according to the disclosure herein;

Fig. 4C shows a plurality of interconnected apparatuses according to the disclosure herein;

Fig. 4D shows a plurality of interconnected apparatuses according to the disclosure herein;

Fig. 4E shows a mechanical arrangement of a plurality of interconnected apparatuses according to the disclosure herein;

Fig. 5A shows an apparatus according to the disclosure herein;

Fig. 5B shows an apparatus according to the disclosure herein;

Fig. 5C shows an apparatus according to the disclosure herein;

Fig. 5D shows an apparatus according to the disclosure herein;

Fig. 5E shows an apparatus according to the disclosure herein;

Fig. 5F shows an apparatus according to the disclosure herein;

Fig. 6A shows an apparatus according to the disclosure herein;

Fig. 6B shows an apparatus according to the disclosure herein;

Fig. 6C shows an apparatus according to the disclosure herein;

Fig. 7A shows an apparatus according to the disclosure herein;

Fig. 7B shows an apparatus according to the disclosure herein;

Fig. 7C shows an apparatus according to the disclosure herein;

Fig. 8 shows control circuitry according to the disclosure herein;

Fig. 9A shows an example of a power device according to the disclosure herein used in a residential setting;

Fig. 9B shows a power device according to the disclosure herein used in a residential setting;

Fig. 9C shows a power device according to the disclosure herein used in a residential setting;

Fig. 10 shows an example of power converter circuitry according to the disclosure herein;

Fig. 11 shows an example of power converter circuitry according to the disclosure herein;

Fig. 12 shows an example of power converter circuitry according to the disclosure herein;

Fig. 13 shows an example of power converter circuitry according to the disclosure herein;

Fig. 14 shows an example of converter circuitry according to the disclosure herein;

Fig. 15A shows an example of converter circuitry according to the disclosure herein;

Fig. 15B shows an example of a graph according to the disclosure herein;

Fig. 16 shows an example of converter circuitry according to the disclosure herein;

Fig. 17 shows an example of converter circuitry according to the disclosure herein;

Fig. 18 shows a method for controlling a plurality of converters according to the disclosure herein;

Fig. 19A shows a system according to the disclosure herein housed within a single enclosure to form a power device also according to the disclosure herein;

Fig. 19B shows a system according to the disclosure herein housed within two connectable enclosures;

Fig. 19C shows a system according to the disclosure herein housed within a plurality of connectable enclosures; and

Fig. 20 shows a PCB arrangement of a system according to the disclosure herein.

DETAILED DESCRIPTION OF THE DISCLOSURE

In the following description of the various embodiments, reference is made to the accompanying drawings, which form a part hereof, and in which is shown by way of illustration various embodiments in which the disclosure may be practiced. It is to be understood that other embodiments may be utilized, and structural and functional modifications may be made without departing from the scope of the present disclosure.

The disclosure herein, describes various devices, apparatuses, systems and methods for converting power using a plurality of power converter circuitries. The power converter circuitries may be controlled individually or collectively. For example, when a plurality of power converter circuitries are individually controlled, each power converter circuitry may be coupled to a corresponding power source. A controller may control each power converter circuitry to convert power from the corresponding power source. For example, each of the plurality of power sources may be a photovoltaic (PV) generator and each power converter may be coupled to a corresponding PV generator. The controller may control each power converter circuitry (e.g., individually) to convert power from the corresponding PV generator (e.g., at a Maximum Power Point - MPP of the PV generator) connected to input terminals of the power converter circuitry.

Each of the power convert circuitries described herein may be a DC-to-DC power converter configured to convert power from input terminals to output terminals, where the output terminals of the plurality of power converter circuitries are connected in parallel. One or more of the plurality of power converter circuitries is a bidirectional power converter circuitry configured to be connected to a storage device or to a string of PV generators. The power converter circuitries may include a boost converter and a resonant converter, where the resonant converter may include an isolating transformer. The disclosure herein describes a second power converter circuitry (e.g., a DC-to-AC power converter), where input terminals of the second power converter circuitry are connected to the parallel connection of output terminals of the plurality of power convert circuitries.

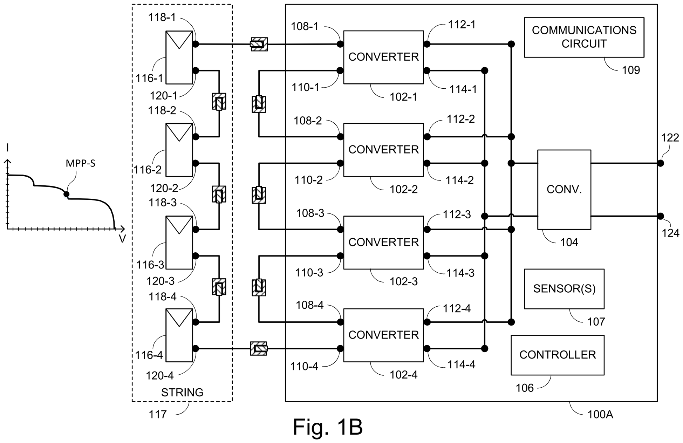

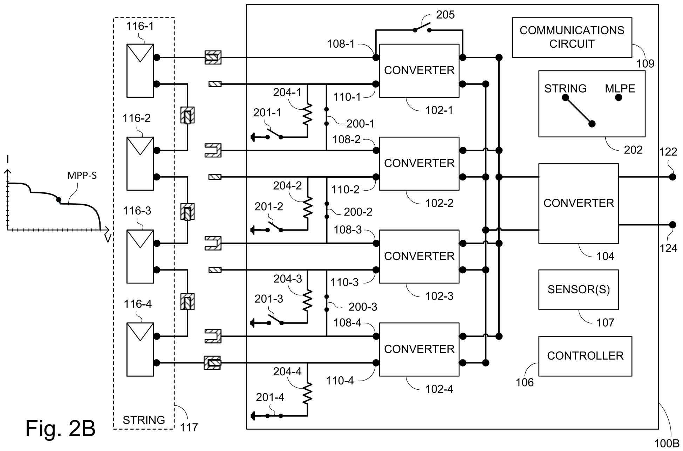

In some cases, the plurality of power converter circuitries may be coupled to a single power source. The controller may control the power converter circuitries to collectively convert power from the power source. For example, the plurality of power converter circuitries may be coupled to a string of serially connected photovoltaic generators (e.g., PV cells, PV substrings, PV modules, PV panels and/or combinations thereof) which form the power source. In such cases, the input terminals of the plurality of power converter circuitries may be coupled in a successive connection (e.g., as further elaborated below and shown in Figs. 1B and 2B). The string of PV generators may be coupled to the successive connection of power converter circuitries, and the controller may control the plurality of power converter circuitries to collectively convert power from the string of PV generators (e.g., at an MPP of the string) from an input of the successive connection of power converter circuitries to an output of the power converter circuitries.

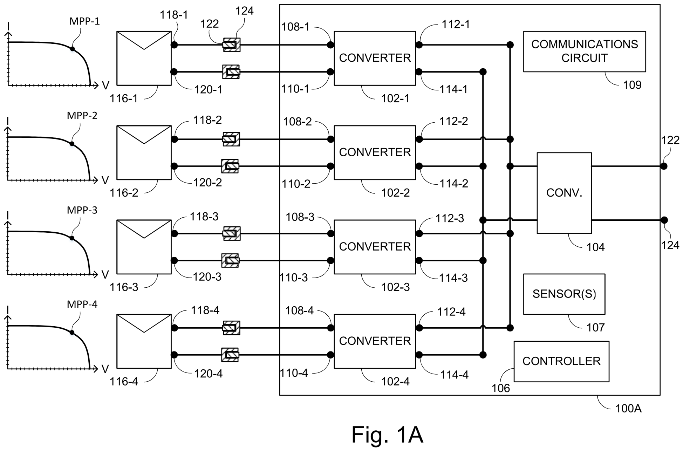

The disclosure herein may relate to a power device, which may have a plurality of aspects, which may be referred to as power device 100. To distinguish between aspects a postfix letter may be used. Reference is now made to Figs. 1A-1C, which show a power device 100A, for converting power from a plurality of power sources. Power device 100A may be used in a power generation system, such as a photovoltaic installation, to convert a first (e.g., input) power from PV generators to a second (e.g., output) power having certain electrical characteristics (e.g., voltage, frequency). The electrical characteristics may be compliant with regulations and/or are suitable to be used in a premises of a user. The electrical characteristics may be controlled using a controller which controls a power converter circuitry as further explained below. Power device 100A includes a plurality of power converter circuitries. Some or all of the power converter circuitries may be housed in a housing of the power device that may be a shared enclosure configured to house the power converter circuitries. Figs. 1A and 1B show an example where power device 100A includes four power converter circuitries 102-1 through 102-4. According to features of the disclosure herein, a different number of power converter circuitries may be used, but for simplicity, this disclosure will primarily use the example of four or six power converter circuitries. Power device 100A may further include an additional power converter circuitry 104, controller 106, sensor(s) 107, and/or communications circuitry 109. Each one of power converter circuitries 102-1 through 102-4 may include a plurality of input terminals. The plurality of input terminals may include a first (e.g., positive) input terminal and a second (e.g., negative) input terminal. The plurality of input terminals may include an optional third (e.g., neutral) input terminal. For example, power converter circuitry 102-1 may include: positive input terminal 108-1, negative input terminal 110-1, positive output terminal 112-1, and negative output terminal 114-1. Similarly, power converter circuitry 102-2 may include: positive input terminal 108-2, negative input terminal 110-2, positive output terminal 112-2, and negative output terminal 114-2, power converter circuitry may102-3 include: positive input terminal 108-3, negative input terminal 110-3, positive output terminal 112-3, and negative output terminal 114-3, and power converter circuitry 102-4 may include: positive input terminal 108-4, negative input terminal 110-4, positive output terminal 112-4, and negative output terminal 114-4. In power device 100A, as depicted in Figs. 1A and 1B, the positive output terminals 112-1 through 112-4 may be coupled to each other and the negative output terminals 114-1 through 114-4 are coupled to each other (i.e., the positive output terminals are connected in parallel to the negative output terminals), and to additional power converter circuitry 104. According to other examples, all of the output terminals of the four power converter circuitries may be connected to each other in series (e.g., terminal 114-1 connected to terminal 112-2, terminal 114-2 connected to terminal 112-3, terminal 114-3 connected to terminal 112-4), and two edge terminals of the series connection (e.g., terminals 112-1 and 114-4) may be coupled to additional power converter circuitry 104.

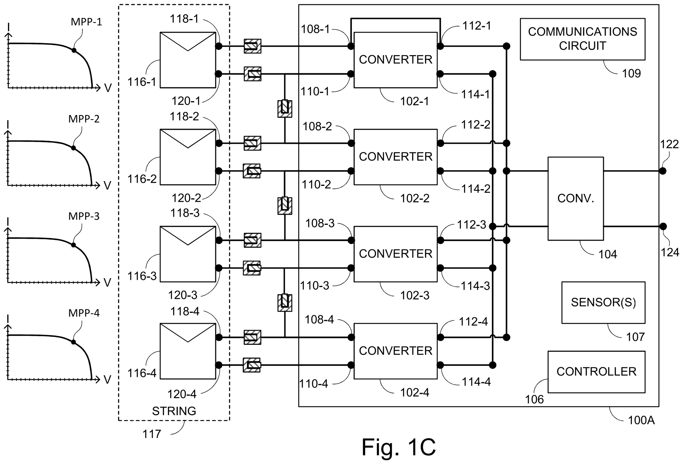

According to the disclosure herein, controller 106 may selectively control power converter circuitries 102-1 through 102-4 to individually or collectively convert power. Fig. 1A shows a first configuration in which controller 106 may operate according to a first mode to control power converter 102-1 through 102-4 to individually convert power from a corresponding PV generator 116-1 through 116-4. Fig. 1B shows a second configuration in which controller 106 may operate according to a second mode to control power converter 102-1 through 102-4 to collectively convert power from a string 117 of PV generators 116-1 through 116-4 (e.g., at the MPP of string 117). Fig. 1C shows a third configuration in which controller 106 may operate according to a third mode to control (in this configuration, isolated) converter circuitries 102-1 through 102-4 (e.g. flyback, forward, or other isolating converter circuitries) to individually convert differential power from a corresponding PV generator 116-1 through 116-4. The first configuration shown in Fig. 1A may be referred to as the "panel configuration" and the first mode may be referred to as "panel mode". The second mechanical shown in Fig. 1B may be referred to as the "string configuration" and the second mode may be referred to as "string mode". The third configuration shown in Fig. 1C may be referred to as the "differential power configuration" and the first mode may be referred to as "differential power mode".

Referring to Fig. 1A, each power converter circuitry 102-1 through 102-4 is coupled to a corresponding PV generator 116-1 through 116-4. Positive input terminal 108-1 and negative input terminal 110-1 of power converter circuitry 102-1 may be coupled, respectively, to positive output terminal 118-1 and negative output terminal 120-1 of corresponding PV generator 116-1. Similarly, positive input terminal 108-2 and negative input terminal 110-2 of power converter circuitry 102-2 may be coupled, respectively, to positive output terminal 118-2 and negative output terminal 120-2 of corresponding PV generator 116-2, and positive input terminal 108-3 and negative input terminal 110-3 of power converter circuitry 102-3 may be coupled, respectively, to positive output terminal 118-3 and negative output terminal 120-3 of corresponding PV generator 116-3. Furthermore, positive input terminal 108-4 and negative input terminal 110-4 of power converter circuitry 102-4 may be coupled, respectively, to positive output terminal 118-4 and negative output terminal 120-4 of corresponding PV generator 116-4. Controller 106 may control each one of power converter circuitries 102-1 through 102-4 to individually convert power from the respective input terminals 108 and 110 to the respective output terminals 112 and 114, for example, by implementing a maximum power point tracking (MPPT) algorithm to operate as close as possible to a maximum power point (MPP) of the corresponding PV generator 116-1 through 116-4.

In some cases, and with reference to Fig. 1B, PV generators 116-1 through 116-4 may be connected in series to form a string 117, which may be considered a single power source (e.g., since serially connected PV generators carry a common current). For example, in string 117, negative terminal 120-1 of PV generator 116-1 is coupled to positive input terminal 118-2 of PV generator 116-2. Similarly, negative terminal 120-2 of PV generator 116-2 is coupled to positive input terminal 118-3 of PV generator 116-3, and negative terminal 120-3 of PV generator 116-3 is coupled to positive input terminal 118-4 of PV generator 116-4. Connecting PV generators 116-1 through 116-4 in a string may be done for a variety of reasons, such as, by choice of a user and/or a system installer, or due to physical constraints (e.g., which may impede cables being deployed from each PV generator). According to the disclosure herein, in the second configuration which is shown in Fig. 1B, the input terminals of power converter circuitries 102-1 through 102-4 may be coupled in a successive connection (e.g., using mating connectors). In the successive connection of power converter circuitries 102-1 through 102-4, negative input terminal 110-1 of power converter circuitry 102-1 is coupled to positive input terminal 108-2 of power converter circuitry 102-2. Similarly, negative input terminal 110-2 of power converter circuitry 102-2 is coupled to positive input terminal 108-3 of power converter circuitry 102-3, and negative input terminal 110-3 of power converter circuitry 102-3 is coupled to positive input terminal 108-4 of power converter circuitry 102-4. Positive input terminals 108-2 through 108-4 and negative input terminals 110-1 through 110-3 may be coupled using cables having connectors, where the cables of sufficient length which may facilitate the successive connection of power converter circuitries 102-1 through 102-4. The connectors may be mating connectors (e.g., MC4) where a male part such as male part 122 may be connected to a female part such as female part 124. The successive connection of power converter circuitries 102-1 through 102-4 may be coupled to string 117 by coupling the positive input terminal 108-1 of power converter circuitry 102-1 to the positive input terminal 118-1 of PV generator 116-1, and coupling the negative input terminal 110-4 of power converter circuitry 102-4 to the negative input terminal 120-4 of PV generator 116-4. In some cases, jumper cables may be used to connect power converter circuitries 102-1 through 102-4 in a successive connection. In cases, for example where power device 100A comprises a printed circuit board (PCB) with terminals 108-1 through 110-4 configured to connect to substrings of PV cells in a single panel, power converter circuitries 102-1 through 102-4 may be coupled in a successive connection by use of ribbon wire, internal-PCB jumpers enabling interconnection via PCB layers.

In the second configuration shown in Fig. 1B, controller 106 may control power converter circuitries 102-1 through 102-4 in a second mode, where power converter circuitries 102-1 through 102-4 collectively convert power from string 117 at an MPP of string 117. For example, sensor(s) 107 may measure a string voltage between terminals 108-1 and 110-4 and a string current into terminal 108-1, to monitor the power extracted from string 117. Controller 106, using an MPPT algorithm (e.g., perturb and observe, incremental conductance, etc.), may determine a string voltage, Vs, for string 117. Controller 106 may determine a reference voltage for the input voltage of each of power converter circuitries 102-1 through 102-4 to be Vs/N. For example, N may be the number of converter circuitries. In the example of Fig. 1B the input voltage may be Vs/4. Since the output of power converter circuitries 102-1 through 102-4 are connected in parallel, the voltage between these output terminals is equal. Since the duty cycle is determined based on the reference voltages Vs/4, the input voltages of power converters 102-1 through 102-4 may also be equal. According to the disclosure herein, a corresponding reference voltage may set by controller 106 to each of power converter circuitries 102-1 through 102-4 (e.g., based on input voltage ratings, efficiency considerations and the like).

According to the disclosure herein, power converter circuitries 102-1 through 102-4 may be configured in a third configuration. In the third configuration, power converter circuitries 102-1 through 102-4 may be successively connected, and may be further connected to a corresponding one of PV generators 116-1 through 116-4. Furthermore, in the third configuration, terminal 108-1 is connected to terminal 112-1. When connected in the third configuration, controller 106 may control power converter circuitries 102-1 through 102-4 in a third mode, where power converter circuitries 102-1 through 102-4 convert differential power. For example, additional power converter circuitry 104 may draw power from string 117 for a load connected between terminals 122 and 124. Also, the power drawn by such a load may be at the sum of the MPPs of PV generators 116-1 through 116-4. In this example, of PV generators 116-1, 116-2, and/or 116-4 may be matched, and the MPP current of PV generators 116-1, 116-2, and/or 116-4 may be 5 Amperes (5A), and the MPP current of PV generator 116-3 may be 3A. In such a case power converter circuitry 102-3 may process the differential power such that a current of 3A flows through PV generator 116-3, and 5A flows through PV generators 116-1, 116-2, and 116-4.

According to the disclosure herein, power converter circuitries 102-1 through 102-4 may be DC-DC power converter circuitries, and may provide converted power from PV generators 116-1 through 116-4 to additional power converter circuitry 104. Additional power converter circuitry 104 may be DC-to-AC converter circuitry, which may be configured to convert the power from power converter circuitries 102-1 through 102-4 to output power provided at output terminals 122 and 124, where the power at output terminals 122 and 124 may be suitable for use (e.g., by an energy storage device, an inverter, a power distribution grid and/or a load). Alternatively, according to the disclosure herein, power converter circuitries 102-1 through 102-4 may be DC-to-AC converter circuitries and may provide converted power from PV generators 116-1 through 116-4 to additional power converter circuitry 104. Additional power converter circuitry 104 may be AC-AC converter circuitry which may be configured to convert the power from power converter circuitries 102-1 through 102-4 to output power provided at output terminals 122 and 124. In both examples, additional power converter circuitry 104 may convert power from power converter circuitries 102-1 through 102-4 to power having electrical characteristics (e.g., voltage, frequency, etc.) that may be compliant with a regulator (e.g., a power grid operator) and/or may be suitable to be used in a premises of a user. According to additional features of the disclosure herein, power converter circuitry 104 may be DC-DC converter circuitry configured to receive DC voltage from power converter circuitries 102-1 through 102-4 and convert the DC voltage to an output DC voltage suitable for use by an external device (e.g., storage, inverter, and/or load). According to additional features of the disclosure herein, additional power converter circuitry 104 might not be included at all, and power converter circuitries 102-1 through 102-4 may output a voltage suitable for use by an external device (e.g., storage, inverter, power distribution grid, and/or load) without further conversion. Where additional power converter circuitry 104 is not included, output terminals 122 and 124 may be coupled to terminals 112-1 through 112-4 and 114-1 through 114-4 (e.g., output terminal 122 may be connected to output terminals 112, and output terminal 124 may be connected to output terminals 114).

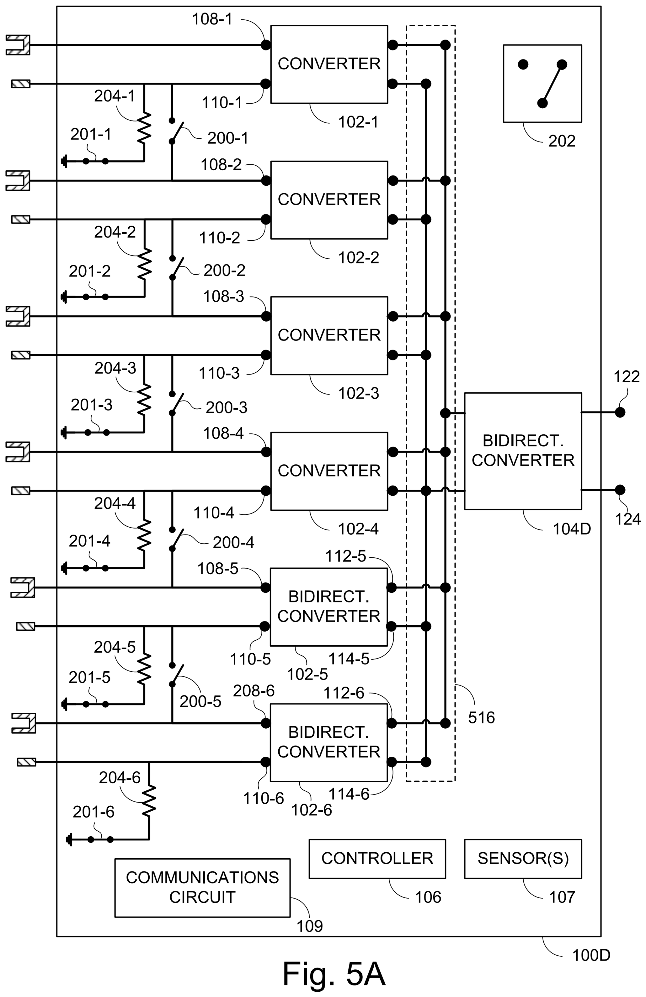

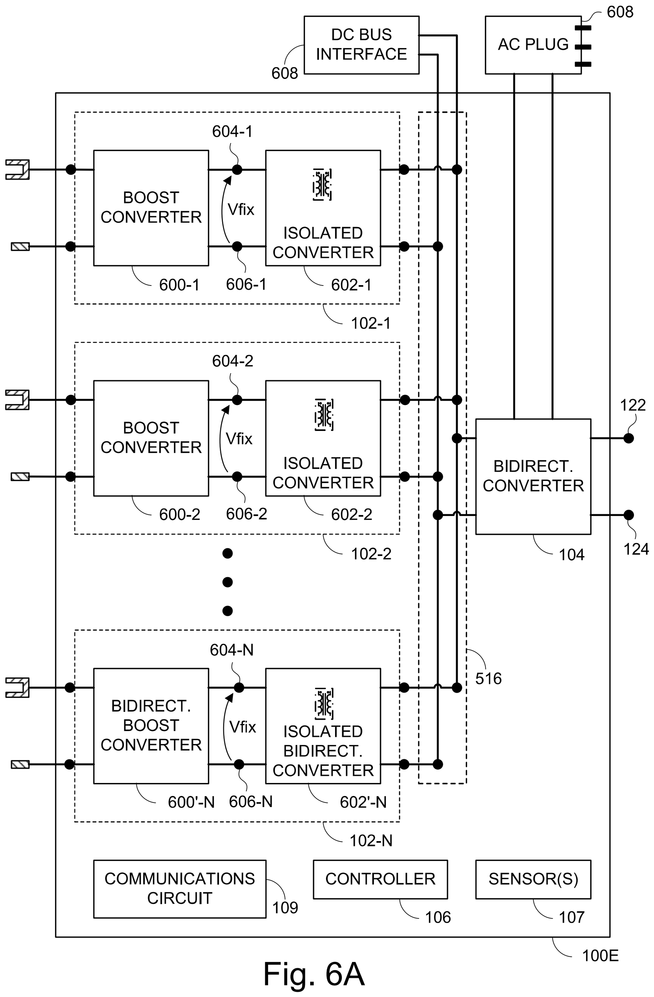

According to the disclosure herein, power converter circuitries such as power converter circuitries 102-1 through 102-4, may be of various types. For example, each of power converter circuitries 102-1 through 102-4 may be DC-DC converter circuitries such as buck converters, boost converters, buck-boost converters, Cuk converters, SEPIC converters, flyback converters, and/or resonant converters (e.g., inductor (L), inductor (L), capacitor (C) (LLC) converters). Power converter circuitries 102-1 through 102-4 may be non-isolated, or isolated (e.g., using a transformer). Each of power converter circuitries 102-1 through 102-4 may be unidirectional or bidirectional as may further be elaborated below. Each of power converter circuitries 102-1 through 102-4 may include a combination of two or more converter circuitries (e.g., a boost converter and an LLC converter as may further be elaborated below). In cases in which power converter circuitries 102-1 through 102 are isolated, input terminals may be reference to a first reference potential, and output terminals 112 may be referenced to a second reference potential. According to the disclosure herein, power converter circuitries 102-1 through 102-4 may be bidirectional power converter circuitries as discussed herein below (e.g., in conjunction with Figs. 5A-F and/or 6A-6B). According to the disclosure herein, power converter circuitries such as additional power converter 104 may be of various types. For example, additional power converter circuitry 104 may be DC-AC converter circuitry such as half-bridge converter, a full bridge converter, a neutral point clamped (NPC) converter (e.g., T-type NPC, A-type NPC), and may convert power at multiple power levels (e.g., 2, 3, 5 or any suitable number). Additional power converter circuitry 104 may be non-isolated, or isolated (e.g., using a transformer) and may be unidirectional or bidirectional as is elaborated below.

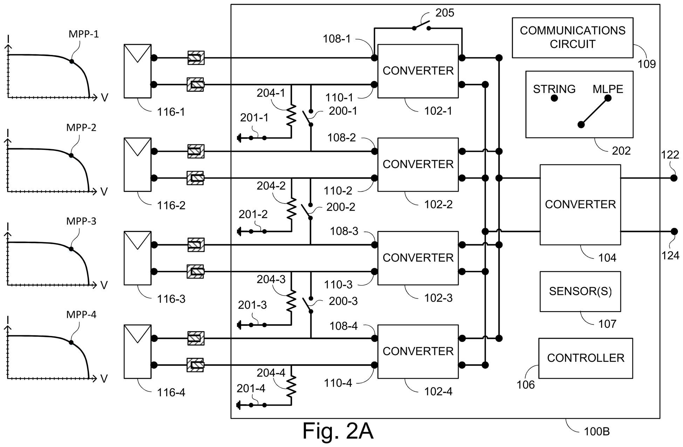

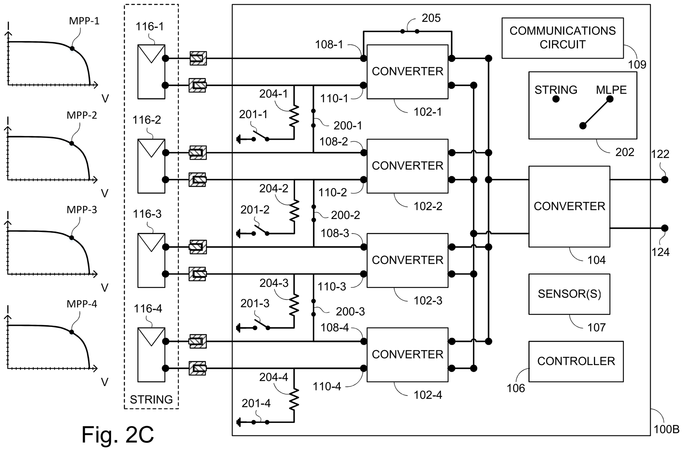

In the examples shown in Figs. 1A, 1B and 1C, power converter circuitries 102-1 through 102-4 may be coupled in one of a panel configuration, a string configuration or a differential power configuration using cables and/or connectors. According to the disclosure herein, power device 100 may be configured using switches. Reference is now made to Figs. 2A, 2B, and 2C which shows power device 100B, where power converter circuitries 102-1 through 102-4 may be coupled in a panel configuration, a string configuration or a differential power configuration using switches. It is noted that, for the sake of clarity of the figures, Figs. 2A, 2B, and 2C may include similar elements as shown in Figs. 1A, 1B, and 1C, but might not include all reference numerals used in Figs. 1A, 1B, and 1C. Figs. 2A, 2B, and 2C show example power device 100B, further including switches 200-1 through 200-3 and may further comprise a selection switch 202. Switch 200-1 is coupled between negative input terminal 110-1 of power converter circuitry 102-1 and positive input terminal 108-2 of power converter circuitry 102-2. Similarly, switch 200-2 is coupled between negative input terminal 110-2 of power converter circuitry 102-2 and positive input terminal 108-3 of power converter circuitry 102-3, and switch 200-3 is coupled between negative input terminal 110-3 of power converter circuitry 102-3 and positive input terminal 108-4 of power converter circuitry 102-4. According to the disclosure herein, power device 100B may further include switches 201-1, 201-2, 201-3, and 201-4 and resistors 204-1, 204-2, 204-3 and 204-4. Each of switches 201-1 through 201-4 may be coupled in series with a corresponding resistor 204-1 through 204-2. The series connection of switch 201-1 and resistor 204-1 may be coupled between terminal 110-1 and a reference potential (may also referred to herein as ground potential or ground). The series connection of switch 201-2 and resistor 204-2 may be coupled between terminal 110-2 and ground. The series connection of switch 201-3 and resistor 204-3 may be coupled between terminal 110-3 and ground. The series connection of switch 201-4 and resistor 204-4 may be coupled between terminal 110-4 and ground. The series connection of each of switches 201-1 through 201-4 with a corresponding resistor 204-1 through 204-4 may selectively, based on the configuration of the switch, provide a path to ground to a corresponding one of power converter circuitries 102-1 through 102-4. According to the disclosure herein, power device may include differential bypass switch 205 which may connect terminal 108-1 to terminal 110-1, or disconnect terminal 108-1 from terminal 110-1, used for the differential power configuration as further explained below.

In the panel configuration, shown in Fig. 2A, power converter circuitries 102-1 through 102-4 may be coupled with corresponding PV generators 116-1 through 116-4, as described above in conjunction with Fig. 1A, and switches 200-1 through 200-3 are in a non-conducting state (e.g., OFF). Furthermore, switches 201-1 through 201-4 are in a conducting state (e.g., ON), thus providing a path to ground for each corresponding power converters 102-1 through 102-4. Switch 205 is in a non-conducting state. In the string configuration, shown in Fig. 2B, power converter circuitries 102-1 through 102-4 are connected in a successive connection by controlling switches 200-1 through 200-3 to be in a conducting state (e.g., rather than using cables). In Fig. 2B, PV generators 116-1 through 116-4 are connected in a string 117 (similar to Fig. 1B), and string 117 is connected to the successive connection of power converter circuitries 102-1 through 102-4 (also similar to Fig. 1B), in the string configuration. In the string configuration, switches 201-1 through 201-3 are in a non-conducting state. Switch 201-4 is in a conducting state providing a path to ground for the successive connection of power converter circuitries 102-1 through 102-4 and string 117. In Fig. 2B, switch 205 is shown to be in the non-conducting state.

Switches 200-1 through 200-3 may be electrical switches (e.g., transistors, diacs, triacs, etc.), mechanical switches, or electromechanical switches (e.g., relays). Switches 200-1 through 200-3 may be controlled to transition between a conducting state and a non-conducting state in various ways. For example, controller 106 may control switches 200-1 through 200-3 to transition between a conducting state (e.g., according to the first configuration) and a non-conducting state (e.g., according to the second configuration), following input of a user selection from a user interface. Based on the state (e.g., conducting or non-conducting) of switches 200-1 through 200-3, controller 106 may selectively control power converter circuitries 102-1 through 102-4 to convert power either individually or collectively. For example, selection switch 202 may control switches 200-1 through 200-3 to transition between a conducting state and a non-conducting state. Selection switch 202 may be a mechanical switch or an electromechanical switch. When using selection switch 202, selection switch 202 may be coupled to controller 106 and configured to indicate (e.g., provide a signal) to controller 106 a selection of the mode from a plurality of modes. Based on the indication from selection switch 202, controller 106 may selectively control power converter circuitries 102-1 through 102-4 to convert power individually or collectively. Further according to the disclosure herein, in the first configuration, each of PV generators 116-1 through 116-4 may be coupled to a ground reference individually (e.g., using all of switches 201), while in the second configuration, string 117 may be coupled to the ground reference (e.g., at one of PV generators 116-1 through 116-4 using one or more of switches 201).

With reference to Fig. 2A, and as described above, in the first configuration, when operating in the first mode: positive output terminals 118-1 through 118-4 of PV generators 116-1 through 116-4 may be coupled to corresponding positive input terminals 108-1 through 108-4, and negative output terminals 120-1 through 120-4 of PV generators 116-1 through 116-4 may be coupled to corresponding negative input terminals 110-1 through 110-4. With reference to Fig. 2A, in the panel configuration, when operating in the first mode: switches 201-1 through 201-4 are in a conducting state, coupling each negative output terminals 120-1 through 120-4, of corresponding PV generators 116-1 through 116-4 and each negative input terminals 110-1 through 110-4 of corresponding power converter circuitries 102-1 through 102-4 to a common ground reference, which may facilitate effective control of power converter circuitries 102 and/or increase safety. Switches 200-1 through 200-3, and switch 205 are in a non-conducting state.

With reference to Fig. 2B, in the sting configuration, when operating in the second mode: switches 201-1 through 201-3 are in a non-conducting state, while switch 201-4 is in the conducting state. Thus, string 117 and the successive connection of power converters 102-1 through 102-4 is coupled to ground via resistor 204-4. Controller 106, and/or selection switch 202 may control switches 201-1 through 201-3 to transition between the conducting state and the non-conducting state (e.g., similar to switches 200-1 through 200-3). In Fig. 2B switch 205 is shown to be in the non-conducting state.

With reference to Fig. 2C, in the differential power configuration, when operating in the differential power mode: switches 201-1 through 201-3 are in a non-conducting state, while switch 201-4 is in the conducting state. Switches 200-1 through 200-3, and switch 205 are in a conducting state. Thus, string 117 and the successive connection of power converters 102-1 through 102-4 may be coupled to ground via resistor 204-4 and switch 201-4.

In Figs. 2A, 2B, and 2C, multiple ground terminals are illustrated, for visual simplicity. The multiple illustrated ground terminals may be electrically linked together to form a single, common ground reference terminal.

According to features of the disclosure herein, one or more power converter circuitries 102 may be individually connected to one or more respective power sources (e.g., PV generators 116) and one or more power converter circuitries 102 may be successively connected and collectively coupled to a power source in any appropriate combination. For example, power converter circuitry 102-1 may be connected to a PV generator 116-1 via terminal 108-1 and 110-1, as shown in Fig. 1A and Fig. 2A, and may be configured and operated to control (e.g., via MPPT) power drawn from PV generator 116-1. Power converter circuitries 102-2 through 102-4 may be successively coupled (e.g., either using connectors as in Fig. 1A, or by controlling switches 200-2 and 200-3 to be in a conducting state, controlling switch 200-1 to be in a non-conducting state) and PV generators 116-2 through 116-4 may be serially connected to form a string, and the string may be coupled between terminals 108-2 and 110-4 and controlled collectively by power converter circuitries 102-2 through 102-4. As another example, power converter circuitries 102-1 and 102-2 may be successively coupled by coupling terminal 110-1 to terminal 108-2 (e.g.., using connectors, or controlling switch 200-1 to be in a conducting state), PV generators 116-1 and 116-2 may be connected in series to form a first string, and the first string may be coupled to terminals 108-1 and 110-2. Controller 106 may collectively control power converter circuitries 102-1 and 102-2 to draw power from the string of PV generators 116-1 and 116-2. Switch 201-1 or switch 201-2 may be in a conducting state to connect the first string to ground. Power converter circuitries 102-3 and 102-4 may be successively coupled by coupling terminal 110-3 to terminal 108-4 (e.g.., using connectors, or controlling switch 200-3 to be in a conducting state), PV generators 116-3 and 116-4 may be connected in series to form a second string, and the second string may be coupled to terminals 108-3 and 110-4. Switch 200-2 and 205 may be in a non-conducting state. Controller 106 may collectively control power converter circuitries 102-3 and 102-4 to draw power from the string of PV generators 116-3 and 116-4. Switch 201-3 or switch 201-4 may be in a conducting state to connect the second string to ground. Alternatively, each of power converter circuitries 102-3 and 102-4 may be individually coupled to a single power source (e.g., PV generators 116-3 and 116-4, respectively) and may control (e.g., via MPP) each power source separately.

According to the disclosure herein, controller 106 may determine if power converter circuitries 102-1 through 102-4 are successively connected by transitioning switches 201-1 through 201-3 to ON, and measuring the voltage across each of the resistors 204-1 through 204-3 individually. In case the voltage across each of the resistors 204-1 through 204-3 is below a threshold (e.g., substantially zero), then controller 106 may determine that power converter circuitries 102-1 through 102-4 are successively connected.

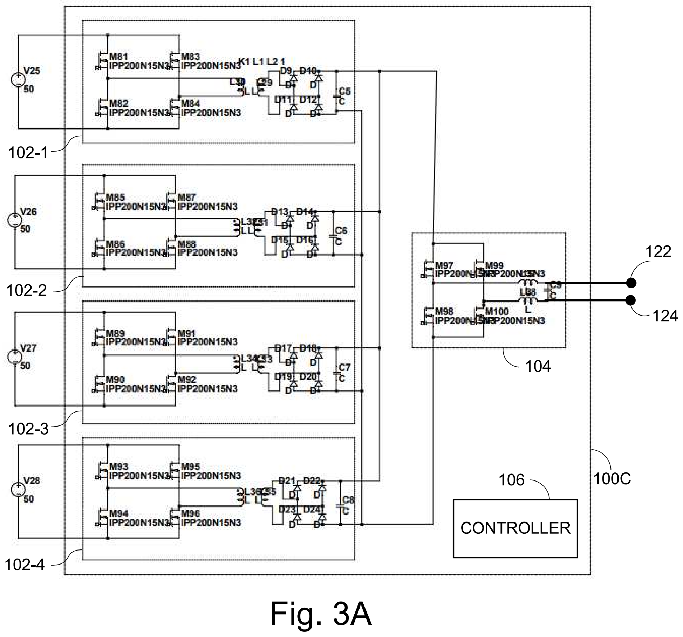

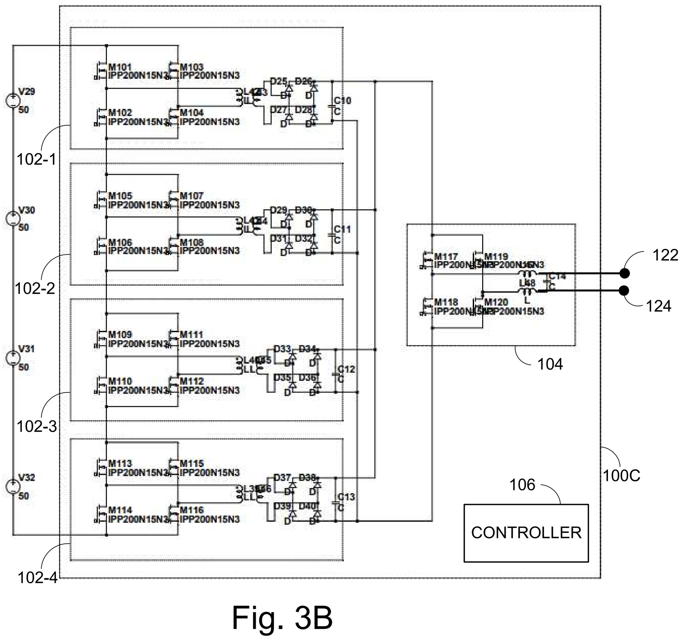

Reference is now made to Figs. 3A and 3B. Fig. 3A shows an example power device 100C according to the first configuration. Fig. 3B shows power device 100C according to the second configuration.

According to the disclosure herein, controller 106 may control power converter circuitries 102-1 through 102-4 at a relatively high switching frequency (e.g., tens of kilo Hertz, hundreds of kilo Hertz, Mega Hertz). As elaborated in the disclosure herein, power converter circuitries 102-1 through 102-4, and additional power converter circuitry 104 may be implemented using converter circuits each having multilevel conversion architectures, such as: half-bridge, full-bridge, T-type neutral point clamped (TNPC), A-type neutral point clamped (A-NPC), etc.

According to features of the disclosure herein, output terminals 122 and 124 of a plurality of power devices, such as power device 100, may be connected in parallel, to combine power processed by the plurality of power devices, regardless of how each particular power device 100 is configured and operated. For example, a plurality of power devices 100 may each be configured and arranged as shown in Fig. 1A, and output terminals 122 and 124 of the plurality of power devices may be coupled in parallel. As another example, a plurality of power devices 100 may be each configured and arranged as shown in Fig. 1B, and output terminals 122 and 124 of the plurality of power devices may be coupled in parallel. As yet another example, a first group of one or more power devices 100 may be each configured and arranged as shown in Fig. 1A, a second group of one or more power devices 100 may be each configured and arranged as shown in Fig. 1B, and output terminals 122 and 124 of each power device of the first group and of the second group may be coupled in parallel.

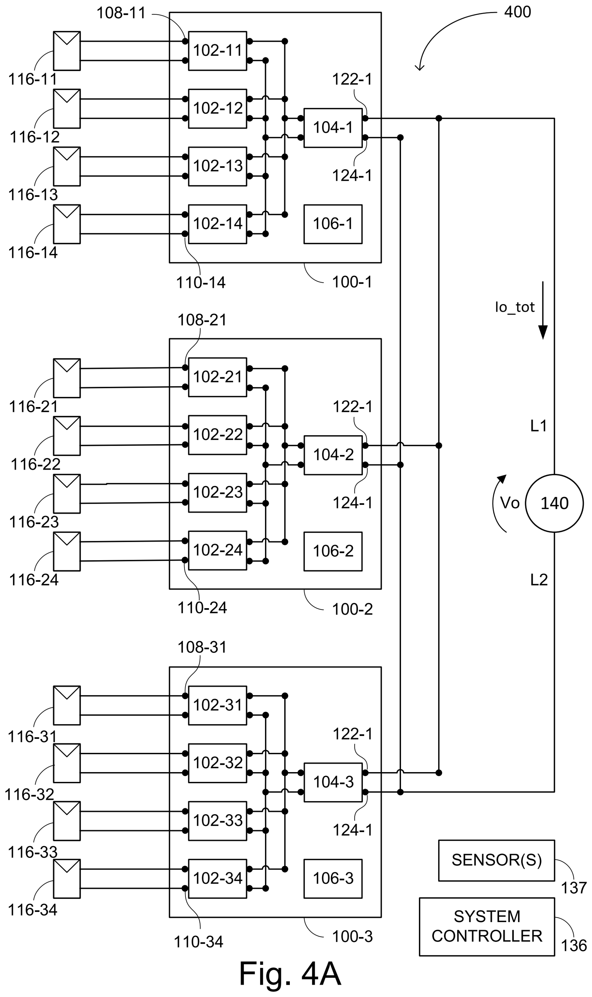

Reference is now made to Figs. 4A-4D, which illustrate a power system 400 according to aspects of the disclosure herein. Power system 400 may include a plurality of power devices, such as power device 100 (as shown in Figs. 1A-1C, 2A-2C, 3A-3B). Power system 400 may have any appropriate number of power devices 100. Some or all of the power devices may be housed in a housing of the power system that may be a shared enclosure configured to house the power devices. In the example shown in Figs. 4A-4D, power system 400 includes 3 power devices, power device 100-1, power device 100-2, and power device 100-3. Output terminals 122-1, 122-2, and 122-3 of power devices 100-1, 100-2, and 100-3 respectively are connected to each other, and output terminals 124-1, 124-2, and 124-3 of power devices 100-1, 100-2, and 100-3 respectively are connected to each other, thus forming a parallel connection of the output terminals of power devices 100-1, 100-2, and 100-3. The parallel connection of the output terminals of power devices 100-1, 100-2, and 100-3 may form output lines L1 and L2. Output terminals 122-1, 122-2, and 122-3 may form output Line L1. Output terminals 124-1, 124-2, and 124-3 may form output Line L2. Output lines L1 and L2 may combine power processed by power devices 100-1, 100-2, and 100-3 to a combined output power. Where the power devices 100 output DC power, output lines L1 and L2 are DC lines. Where the power devices 100 output AC power, output lines L1 and L2 are AC lines. Output lines L1 and L2 may be coupled to, and provide power to load 140. Load 140 may be a power distribution grid (e.g., micro-grid, utility grid, etc.) and/or premises. In some examples, the outputs of the power devices 100 may be connected to each other in series across input terminals of load 140. The connections shown in Figs. 4A-4D may be formed using cables and/or switches. Switches may be configured to switch the system 400 between different configurations. In some examples, switches may be used to change the configuration of the output connections of the power devices 100 (e.g., between either a parallel connection across load 140 or a series connection across load 140).

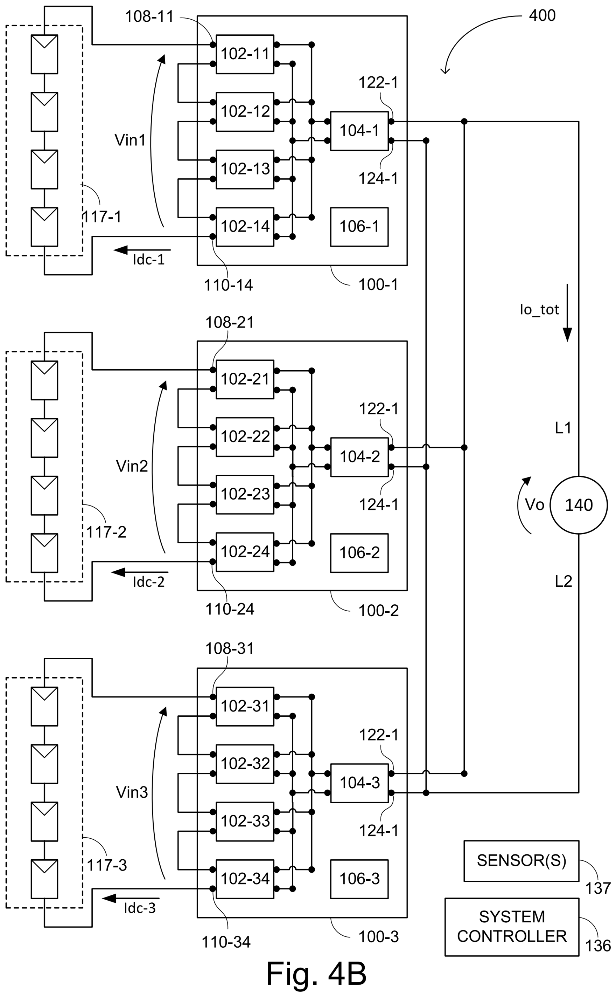

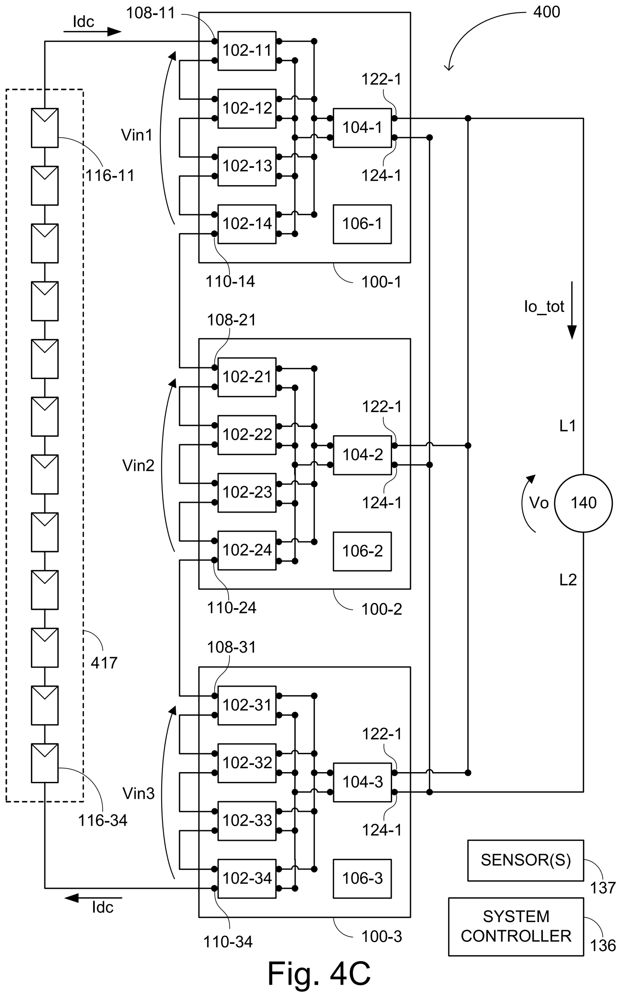

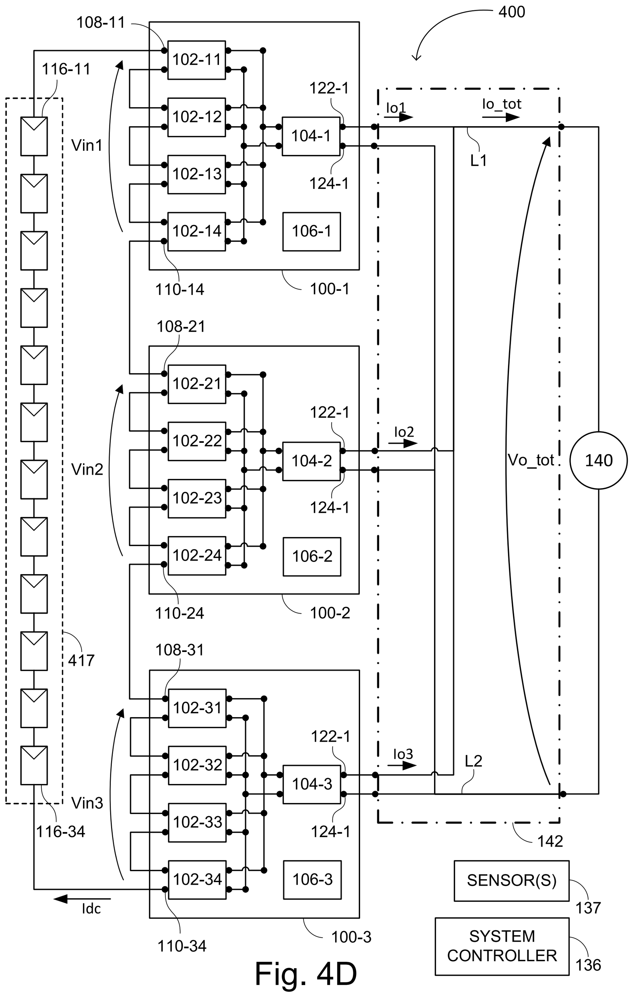

As further elaborated below, in conjunction with Fig. 4A, each of power devices 100-1 through 100-3 may be configured in the first configuration, similar to as shown in Figs. 1A, 2A, and 3A where each power converter circuitry 102-11 through 102-14 in power device 100-1, power converter circuitry 102-21 through 102-24 in power device 100-2, and power converter circuitry 102-31 through 102-34 in power device 100-3 may be coupled to a corresponding PV generator 116. As further elaborated below, in conjunction with Fig. 4B, each of power devices 100-1 through 100-3 may be configured in the second configuration, similar to as shown in Figs. 1B, 2B, and 3B wherein power converter circuitries 102-11 through 102-14 in power device 100-1, power converter circuitries 102-21 through 102-24 in power device 100-2, and power converter circuitries 102-31 through 102-34 in power device 100-3 may be coupled in a successive connection using, for example, cables and/or switches, and where each power device 100-1 through 100-3 may be coupled with a corresponding string 117-1 through 117-3. As further elaborated below, in conjunction with Figs. 4C and 4D, each of power devices 100-1 through 100-3 may be configured in the second configuration similar to as shown in Figs. 1B, 2B, and 3B, and power devices 100-1 through 100-3 may also be successively connected to each other at their inputs. The successive connection of power devices 100-1 through 100-3 may be coupled to a string 417 of PV generators. The string 417 may include all of PV generators 116-11 through 116-34. According to the disclosure herein, a different number of power converters 100 may be used (e.g., two, four, or more).

According to the disclosure herein, and with reference to Fig. 4A, each of power devices 100-1, 100-2, 100-3 may be configured in the panel configuration (e.g., as shown in Figs. 1A, 2A, and 3A). Accordingly, each one of power converters 102-11 through 102-14 in power device 100-1 may be coupled to a corresponding PV generator 116-11 through 116-14, each one of power converter 102-21 through 102-24 in power device 100-2 may be coupled to a corresponding PV generator 116-21 through 116-24, and each one of power converter 102-31 through 102-34 in power device 100-3 may be coupled to a corresponding PV generator 116-31 through 116-34. In this example, each corresponding controller 106-1, 106-2 and 106-3 of a corresponding one of power devices 100-1, 100-2, and 100-3 may control the respective power converter circuitries 102 to operate in the first mode, as described above in conjunction with Fig. 1A. In this example system controller 136 and sensors 137 may be omitted. Nevertheless, system controller 136 and sensor(s) 137 may be used to monitor the voltage Vo across load 140 (e.g., power distribution grid, premises, etc.), and/or the current Io_tot through load 140. System controller 136 may provide controller circuitries 106-1, 106-2, and/or 106-3 with the measurements pertaining to Vo and Io_tot. Controllers 106-1, 106-2, and/or 106-3 may use these measurements in monitoring the corresponding output voltage and/or output currents of their respective power device 100. In some examples, one or more controllers 106 may be omitted, and system controller 136 may be configured to perform their functionalities.

According to the disclosure herein, and with reference to Fig. 4B, each of power devices 100-1 through 100-3 may be configured in the second configuration (e.g., as shown in Figs. 1B, 2B, and 3B) where each of power devices 100-1 through 100-3 may be coupled to a corresponding power source (e.g., a PV string). Accordingly, the input terminal 108-11 of power converter circuitry 102-11 in power device 100-1, and input terminal 110-14 of power converter circuitry 102-14 in power device 100-1 may be connected to a corresponding string 117-1 of PV generators 116-11 through 116-14. Similarly, the input terminal 108-21 of power converter circuitry 102-21 in power device 100-2, and input terminal 110-24 of power converter circuitry 102-24 in power device 100-1 may be connected to a corresponding string 117-2 of PV generators 116-21 through 116-24. The input terminal 108-31 of power converter circuitry 102-31 in power device 100-3, and input terminal 110-34 of power converter circuitry 102-34 in power device 100-3 may be connected to a corresponding string 117-3 of PV generators 116-31 through 116-34. In cases in which each of power device 100-1, 100-2, and 100-3 is connected to a corresponding PV string 117-1, 117-2, and 117-3, a power converter circuitry input, in each of power devices 100-1, 100-2, and 100-3 may be coupled to ground (e.g., via a switch 201). For example, input terminal 110-14 of power device 100-1, input terminal 110-24 of power device 100-2, and input terminal 110-34 of power device 100-3 may each be coupled to ground. In this example, each corresponding controller 106-1, 106-2 and 106-3 of power device 100-1, 100-2, and 100-3 may control the respective power converter circuitry to operate in the second mode, as described above in conjunction with Fig. 1B. In this example, system controller 136 and sensors 137 may be omitted. Nevertheless, as described above in conjunction with Fig. 4A, system controller 136 and sensor(s) 137 may be used to monitor the voltage Vo across load 140, and/or the current Io_tot through load 140. System controller 136 may provide controller circuitries 106-1, 106-2, and/or 106-3 with the measurements pertaining Vo and Io_tot.

Controllers 106-1, 106-2, and/or 106-3 may use these measurements in monitoring the corresponding output voltage and/or output currents of their respective power device 100. In some examples, one or more controller 106 may be omitted, and system controller 136 may be configured to perform their functionalities. In some examples, each of power devices 100-1, 100-2, and 100-3 may be configured in the third configuration (e.g., as shown in Figs. 1C and 2C). In some examples, power devices 100-1, 100-2, and/or 100-3 may be configured in a combination of different configuration (e.g., two power devices 100 in one configuration and one power device 100 in another configuration, all 3 power devices 100 in different configurations, etc.). In some examples, a plurality of power devices may be connected at their inputs (e.g., while each in the second configuration) and connected in parallel across a shared power source (e.g., string of PV generators 116).

According to the disclosure herein, power devices 100-1, 100-2, and 100-3 may be successively connected, and the successive connection of power devices 100-1, 100-2, and 100-3 may be coupled to a power source. Reference is now made to Fig. 4C, which illustrates power system 400, where power devices 100-1, 100-2, and 100-3 may be successively connected, according to aspects of the disclosure herein. In the example shown in Fig. 4C, input terminal 110-14 of power device 100-1 is connected to input terminal 108-21 of power device 100-2. Also, input terminal 110-24 of power device 100-2 is connected to input terminal 108-31 of power device 100-3. The successive connection of power devices 100-1, 100-2, and 100-3 enables power devices 100-1, 100-2, and 100-3 to collectively convert power from a single source. For example, power devices 100-1, 100-2, and 100-3 may be connected to a string 317 of PV generators. String 317 may be connected to input terminal 108-11 in power device 100-1 and to input terminal 110-34 in power device 100-3. Further in the example shown in Fig. 4C, each of power devices 100-1, 100-2, and 100-3 may be configured as shown in Fig. 1B or in Fig. 2B, effectively forming a successive coupling of 12 power converter circuitries (power converter circuitries 102-11 through 102-14 of power device 100-1, power converter circuitries 102-21 through 102-24 of power device 100-2, and power converter circuitries 102-31 through 102-34 of power device 100-3). Power devices 100-1, 100-2, and 100-2 may be successively connected using switches or connectors. The connection to the string 417 may also be done using switches or connectors. In this case of successive connection of a plurality of power devices 100, a single power converter circuitry input (e.g., in this case, terminal 110-34 of power device 100-3) may be coupled to ground (e.g., by switch or connector/cable). A power converter circuitry input may be coupled to ground to help avoid creating a short-circuit across active circuitry.

When power devices 100-1 through 100-3 are successively connected as shown in Fig. 4C, system controller 136 may monitor various parameters of power system 400 (e.g., using sensor(s) 137 and/or receive measurements from power devices 100-1 through 100-3) to balance the corresponding input voltages, Vin1, Vin2, and Vin3 of power devices 100-1, 100-2, and 100-3. (i.e., $V\_in1 \approx V\_in2 \approx V\_in3$). Sensor(s) 137 may measure a level of a voltage, Vo, across load 140, and may measure a level of a current, Io_tot, through load 140, which are provided by the parallel connection of output terminals of power devices 100-1 through 100-3. According to another example, system controller 136 may receive (via wired or wireless communication) output current and voltage measurements from each of power devices 100-1 through 100-3. System controller 136 may calculate a combined total output current Io_tot as a sum of current output by power devices 100-1 through 100-3, and may determine output voltage Vo (which is about the same for each of parallel-connected power devices 100-1 through 100-3). Using the values of Vo and Io_tot, system controller 136 may calculate output power $P_o = V_o \cdot I_{otot}$ and may signal power devices 100-1 through 100-3 to each process approximately $\frac{P_O}{3}$, for system balance. Each power device 100-1 through 100-3 may measure a corresponding input current $I_{dc}$. In cases in which power device 100-1 through 100-3 are successively coupled, as shown in Fig. 4C, $I_{dc}$ may be common to each power device 100-1 through 100-3 (due to the series coupling of power sources 116-11 through 116-34). Each of corresponding controller 106-1 through 106-3 of power devices 100-1 through 100-3, may accordingly calculate a corresponding target input voltage (a voltage between terminal 108-1 and terminal 110-4 of each power device): $V_{in} = \frac{P_O}{3 \cdot I_{dc}}$ such that total input voltage provided by the PV generators 116-1 through 116-12 is shared substantially equally across the three power devices 100-1 through 100-3 (i.e., $V\_in1 \approx V\_in2 \approx V\_in3$). According to aspects of the disclosure herein, each of controller circuitries 106-1 through 106-3 may determine one or more corresponding duty cycles for converter circuitries 102 and/or additional converter circuitry 104 of the respective power device 100 based on the corresponding target input voltage $V_{in1}$, $V_{in2}$, and $V_{in3}$. According to aspects of the disclosure herein, system controller 136 may provide a target duty cycle to each of power devices 100-1 through 100-3, such that all of the successively-coupled power converter circuitries 102 of power devices 100-1 through 100-3 are operating at a common duty cycle, and voltage balance may be achieved (i.e., $V\_in1 \approx V\_in2 \approx V\_in3$). In cases in which power devices 100-1 through 100-3 have different power ratings, the output power may be divided based on the power rating of each of power devices 100-1 through 100-3 and the corresponding duty cycle may be determined accordingly.

According to the disclosure herein, system controller 136 may monitor various parameters of power system 400 to draw power from string 417 at an MPP of string 417. For example, power controller 136 may receive measurements of the input current, $I_{dc}$ (e.g., from one, some, or all or power devices 100-1 through power device 100-3). System controller 136 may receive from power devices 100-1 through 100-3, measurements of the corresponding input voltages $V_{in1}$, $V_{in2}$, and $V_{in3}$. System controller 136 may determine a total input voltage $Vin$, based on the sum of the input voltages of power devices 100-1 through 100-3, $Vin=V_{in1}+V_{in2}+V_{in3}$, and determine an input power based on the total input voltage and the input current $Pin=Vin*Idc$. System controller 136 may modify (e.g., increase or decrease) the total input voltage, $Vin$ (e.g., using an MPPT algorithm such as perturb and observe, or incremental conductance) by determining a target duty cycle for each of power devices 100-1 through 100-3, such that all of the successively-coupled power converter circuitries 102 of power devices 100-1 through 100-3 are operating at a duty cycle such that $Vin=V_{in1}+V_{in2}+V_{in3}$.

According to aspects of the disclosure herein, system controller 136 may be external to power devices 100-1 through 100-3. According to aspects of the disclosure herein, system controller 136 may be integrated in one or more of controller circuitries 106-1, 106-2, or 106-3 of one or more of system power devices 100-1 through 100-3, which may be designated as a master power device. For example, controller 106-1 of power device 100-1 may directly measure output current and voltage from power device 100-1 and may receive (e.g., via wired or wireless communication devices) output current and voltage measurements from power devices 100-2 and 100-3, and may calculate a total output current, power, and a target duty cycle for power devices 100-1 through 100-3. According to aspects of the disclosure herein, each corresponding controller 106-1 through 106-3 of power devices 100-1 through 100-3 may transmit (e.g., via wired or wireless communication devices) measurements of the output voltage, the output current, the input voltage, and/or the input current of the corresponding power device. Each controller 106-1 through 106-3 may determine a corresponding duty cycle for each corresponding power converter circuitries 102-1 through 102-4.

Reference is now made to Fig. 4D, which illustrates a parallel connection of power devices 100-1 through 100-3 via a combiner 142. Combiner 142 may provide input terminals for connecting to terminals 122 and 124 of power devices 100-1 through 100-3 and output terminals for providing power to load 140. Combiner 142 may comprise conductors (or switches) to create a parallel connection of outputs of power devices 100-1 through 100-3. In some examples, the switches may be configured to change the output connections to a series connection across load 140. Combiner 142 may comprise sensors 137 configured to measure output currents (Io1, Io2, Io3) and voltage Vo_tot of power devices 100-1 through 100-3. Combiner 142 may be configured to calculate total output current $I_{otot} = I_{o1} + I_{o2} + I_{o3}$. Combiner 142 may comprise controller 136.

Power devices 100-1 through 100-3 may be configured (e.g., via sensor(s) 107 and controller circuitries 106) to monitor input voltages Vin1 through Vin3 and to protect power devices 100-1 through 100-3 against overvoltage conditions. Input overvoltage protection may be useful according to all configurations, but may be particularly useful in the arrangements illustrated in Figs. 4C and 4D, where the total input DC voltage generated by PV string 417 of PV generators 116-11 through 116-34 may be particularly high. For example, if each PV generator 116 provides an output of 40V, and four PV generators may be coupled for each of the three power devices 100-1 through 100-3, a total of 480Vdc may be provided by the twelve PV generators 116 across power devices 100-1 through 100-3. In a voltage-balanced mode of operation, each of power devices 100-1 through 100-3 would have an input voltage of 480/3 = 160V. However, if a single power device (e.g., 100-1) ceases to operate (e.g., due to an internal fault), the total 480V may be provided across power devices 100-2 and 100-3, leading to an input DC voltage of 240V across each. To avoid damage to equipment and/or danger to humans, power devices 100-1 through 100-3 may be configured to, responsive to detecting an input voltage above a threshold, shut down, disconnect and/or or take other action to reduce input voltage between terminals 108-11 and 110-14 to a safe level.

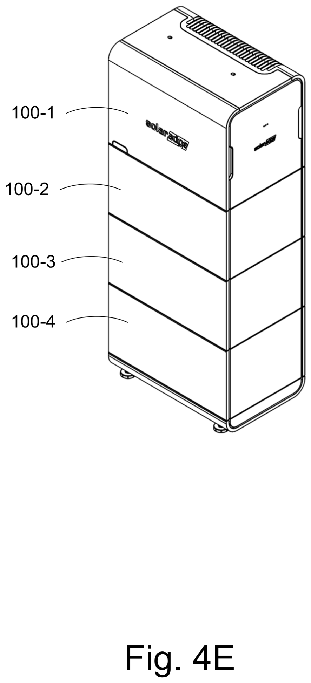

Reference is now made to Fig. 4E, which shows an example mechanical configuration of a plurality of power devices 100. In this example, four power devices 100-1 through 100-4 are depicted, with three modular power devices 100-2 through 100-4 depicted as being substantially identical, with the first power device, 100-1. First power device 100-1 is illustrated differently than the other power devices 100, as it may be a master power device and/or may comprise combiner 140 (e.g., connectors, sensors, communication devices and/or control circuitry configured to determine system parameters and provide control commands to power devices 100-2 through 100-4). For visual simplicity, input and output terminals and cables are not explicitly depicted. Power devices 100-1 through 100-4 may be interconnected (e.g., having parallel-connected output and/or serially connected inputs) via daisy-chaining input/output terminals of the power devices 100-1 through 100-4, or via connectors that come into electrical contact when the power devices 100-1 through 100-4 are mounted upon each other. The connections between the power devices 100 may be made via switches.

As described above, a power system according to the disclosure herein may convert power from a plurality of power sources (e.g., PV generators 116), to output terminals 122 and 124 (e.g., which may be connected to load 140). A power system according to the disclosure herein may include various configurations and types of power converter circuitries, which may be used. For example, a power system according to the disclosure herein may include bidirectional converter circuitries as may be further elaborated herein. The power converter circuitries may include two terminals (e.g., positive and negative) or three terminals (e.g., positive, negative and neutral). In the description that follows are some examples of such configurations and types of power converter circuitries.

Reference is now made to Figs. 5A-5F which show a power device 100D according to the disclosure herein. The power device 100D may include bidirectional power converter circuitries, where the power converter circuitries may have different number of terminals. Figs. 5A-5B shows power device 100D, which may include power converter circuitries 102-1 through 102-4 (as shown in Figs. 1A, 1B, 1C, 2A, 2B, 2C, 3A, and 3B). Power device 100D may further include bidirectional converter circuitries 102-5 and 102-6, and additional bidirectional converter circuitry 104D. Power converter circuitry 102-5 may include positive input terminal 108-5, negative input terminal 110-5, positive output terminal 112-5, and negative output terminal 114-5. Similarly, power converter circuitry 102-6 may include positive input terminal 108-6, negative input terminal 110-6, positive output terminal 112-6, and negative output terminal 114-6. In power device 100D, positive output terminals 112-1 through 112-6 may be connected to each other, and negative output terminals 114-1 through 114-6 may be connected to each other (i.e., the output terminals are connected in parallel), and to additional bidirectional converter circuitry 104D, for example, over a bus 516. Bus 516 may have a plurality of conducting lines. According to the disclosure herein, power converter circuitries 102-1 through 102-6 may be DC-DC converter circuitries and additional bidirectional converter circuitry 104D may be a DC-AC converter circuitry. Thus, bus 516 may be a DC bus. According to the disclosure herein, power converter circuitries 102-1 through 102-6 may be DC-AC converter circuitries and additional bidirectional converter circuitry 104D may be an AC-AC converter circuitry. Thus, bus 516 may be an AC bus.

Bidirectional converter circuitries 102-5 and 102-6 may be configured to be coupled to power sources (e.g., photovoltaic generators, such as PV panels) and may be operable (e.g., by controller 106) to individually maximum-power-point track PV generators, similarly to converter circuitries 102-1 through 102-4 according to the first configuration. Bidirectional converter circuitries 102-5 and 102-6 may be further configured to be successively coupled to converter circuitries 102-1 through 102-4 and, collectively with converter circuitries 102-1 through 102-4, convert power from a single PV generator coupled between converter circuitries 102-1 and 102-6. Bidirectional converter circuitries 102-5 and 102-6 may be further configured to be coupled to energy storage devices (e.g., batteries) and may be operable (e.g., by controller 106) to charge and discharge the energy storage devices. Providing multi-configuration bidirectional converter circuitries, controllable by a centralized controller (e.g., 106) may enhance system design flexibility and efficiency.

As mentioned above power converter circuitries 102-5 and 102-6 may be bidirectional power converter circuitries. In a first conversion direction bidirectional power converter circuitry 102-5 may convert power from terminals 108-5 and 110-5 to terminals 112-5 and 114-5 (and to bus 516). In the first conversion direction power converter circuitry 102-6 may convert power from terminals 108-6 and 110-6 to terminals 112-6 and 114-6 (and to bus 516). In a second conversion direction, bidirectional power converter circuitry 102-5 may convert power from terminals 112-5 and 114-5 (from bus 516) to terminals 108-5 and 110-5. In the second conversion direction, bidirectional power converter circuitry 102-6 may convert power from terminals 112-6 and 114-6 (from bus 516) to terminals 108-6 and 110-6. In power device 100D, additional bidirectional converter circuitry 104D may convert power in the first conversion direction (e.g., from bus 516 to terminals 122 and 124). Additional bidirectional converter circuitry 104D may convert power in the second conversion direction (e.g., from terminals 122 and 124 to bus 516). According to features of the disclosure herein, additional bidirectional converter circuitry 104D may be replaced by converter circuitry 104 of Figs. 1A-4D). In this case, converter circuitry 104 might not convert power from terminals 122 and 124 to bus 516, and energy storage device connected to bidirectional converter circuitries 102-5 and 102-6 may be charged using power obtained from sources coupled to power converter circuitries 102-1 through 102-4.

Providing bidirectional power converter circuitries 102-5 and 102-6 may enable efficient and integrated storage of excess power production obtained from power sources connected to power converters 102-1 through 102-4, by charging energy storage devices via power converter circuitries 102-5 and 102-6. A single controller or a group of communicatively interconnected controllers may collectively control the power converter circuitries to coordinate efficient power-draw from power sources and power charge/discharge of energy storage devices.

According to the disclosure herein, and similar to power device 100 described in Figs. 1A, 1B, 1C, 2A, 2B, 2C, 3A, and 3B, power device 100D may be configured in the first configuration (e.g., similar to as shown in Figs. 1A, 2A and 3A). In the first configuration, switches 201-1 through 201-4, 201-5, and 201-6 may be ON, and switches 200-1 through 200-4, 100-5, and 200-6 may be OFF. In the second configuration switches 201-1 through 201-5 may be OFF, and switches 200-1 through 200-6, and 201-6 may be ON.

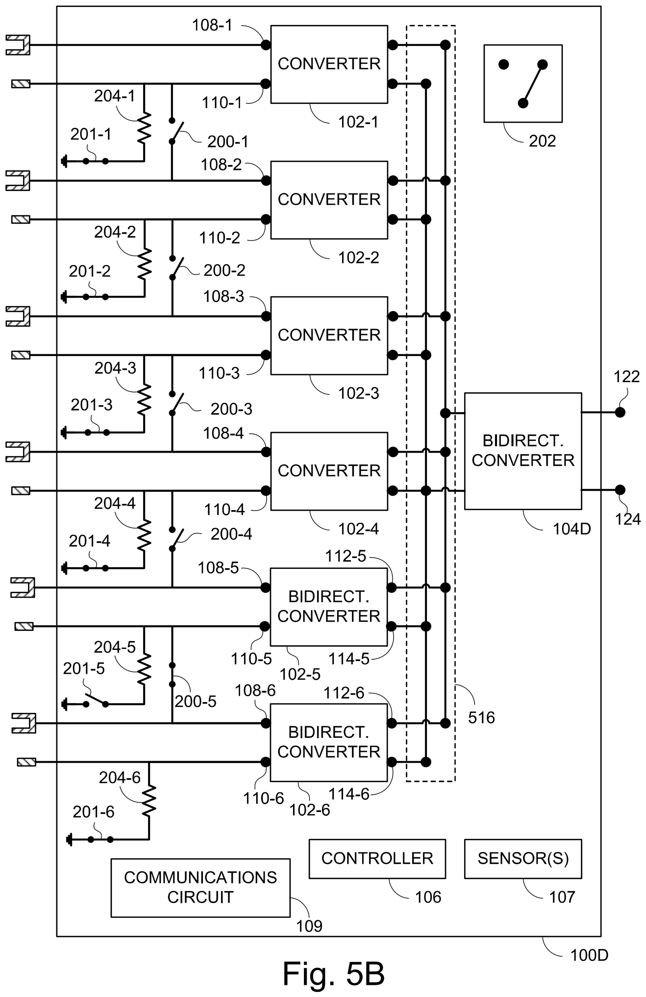

According to the disclosure herein, power device 100D may be configured in a hybrid configuration. Reference is now made to Fig. 5B, which shows an example of power device 100D in a hybrid configuration. In the example configuration shown in Fig. 5B, bidirectional power converter circuitries 102-5 and 102-6 are successively connected. To that end, switch 200-5 may be ON, thereby connecting terminal 110-5 with terminal 108-6, and switch 101-5 is OFF.

When configured in the second configuration, terminal 108-1 of power converter 102-1 and terminal 110-6 of bidirectional power converter 102-6 may be connected to a power source (e.g., a PV string), and power device 100D may convert power from the power source to terminals 122 and 124 similar to as described above in conjunction with Fig. 1B and/or 2B. When configured in the first configuration, power device 100D may operate in one of various operational options. For example, corresponding power sources (e.g., PV generators) may be connected to each of power converter circuitries 102-1 through 102-6. Power device 100D may operate in the first mode were each of power converter circuitries 102-1 through 102-6 may convert power in the first conversion direction from the corresponding power source to bus 516. Bidirectional converter circuitry 504 may convert the power in the first conversion direction from bus 516 to terminals 122 and 124. According to another example, corresponding power sources may be connected to each of power converter circuitries 102-1 through 102-4. A first load may be connected to bidirectional power converter circuitry 102-5 at terminals 108-5 and 110-5, and a second load may be connected to bidirectional power converter circuitry 102-6 at terminals 108-6 and 110-6. The first load and the second load may each be an electrical appliance, an electrical machine, a heat pump, and the like. In this example, bidirectional converter circuitry 102-5 may convert power from terminals 112-5 and 114-5 to terminals 108-5 and 110-5 and to the corresponding first load, and bidirectional converter circuitry 102-6 may convert power from terminals 112-6 and 114-6 to terminals 108-6 and 110-6 and to the corresponding second load. The power at bus 516 may be provided either by power converter circuitries 102-1 through 102-4 from the corresponding power sources and/or by additional bidirectional converter circuitry 104D from terminals 122 and 124.

When configured in a hybrid configuration (e.g., as shown in Fig. 5B), a power source may be connected between terminal 108-5 of bidirectional converter circuitry 102-5 and terminal 110-6 of bidirectional converter circuitry 102-6. Controller 106 may collectively control bidirectional converter circuitry 102-5 and bidirectional converter circuitry 102-6 to convert power from the power source, in the first conversion direction, to additional bidirectional converter circuitry 104D. When configured in a hybrid configuration a load may be connected between terminal 108-5 of bidirectional converter circuitry 102-5 and terminal 110-6 of bidirectional converter circuitry 102-6. Controller 106 may collectively control bidirectional converter circuitry 102-5 and bidirectional converter circuitry 102-6 to convert power, in the second conversion direction, from bus 516 to the load. Similar to as described above in conjunction with Fig. 5A, when providing power to a load, the power at bus 516 may be provided either by power converter circuitries 102-1 through 102-4 from the corresponding power sources, and/or by additional bidirectional converter circuitry 104D from terminals 122 and 124.

According to the disclosure herein, one or more energy storage device(s) may be connected to bidirectional converter circuitries 102-5 and 102-6, either in the first configuration or in the hybrid configuration. For example, in the first configuration, a power source may be connected to each power converter circuitry 102-1 through 102-5, and a storage device may be connected to bidirectional converter circuitry 102-6. In the first configuration, a power source may be connected to each power converter circuitry 102-1 through 102-4, and to bidirectional converter circuitry 102-6, and a storage device may be connected to bidirectional converter circuitry 102-5. In the first configuration a power source may be connected to each 102-1 through 102-4, a first storage device may be connected to bidirectional converter circuitry 102-6, and a second storage device may be connected to bidirectional converter circuitry 102-5. In the hybrid configuration, a power source may be connected to each power converter circuitry 102-1 through 102-4, and a storage device may be connected between terminal 108-5 of bidirectional converter circuitry 102-5, and terminal 110-6 of bidirectional converter circuitry 102-6. As another example, in the second configuration, a single power source (e.g., a string of photovoltaic panels) may be coupled across terminal 108-1 and 110-6, and controller 106 may operate successively connected power converter circuitries 102-1 through 102-6 to converter power from the power source to bus 516.

According to the disclosure herein, a storage device such as discussed above may be discharged or charged. For example, when power sources connected to power converter circuitries 102-1 through 102-4 are not capable of producing sufficient power for a load connected to terminals 122 and 124, controller 106 may control bidirectional converter circuitries 102-5 and/or 102-6 to convert power in the first conversion direction, thereby discharging the storage and providing additional power to bus 516. When power sources connected to power converter circuitries 102-1 through 102-4 are capable of producing more power than required by the load connected to terminals 122 and 124, controller 106 may control bidirectional converter circuitries 102-5 and/or 102-6 to convert power in the second conversion direction, from bus 516, thereby charging the storage device with excess power (power not used by the load connected to terminals 122 and 124). When terminals 122 and 124 are connected to a power distribution grid, controller 106 may control additional bidirectional converter circuitry 104D and bidirectional converter circuitries 102-5 and/or 102-6 to convert power in the second conversion direction, thus charging the storage device with power from the a power distribution grid.

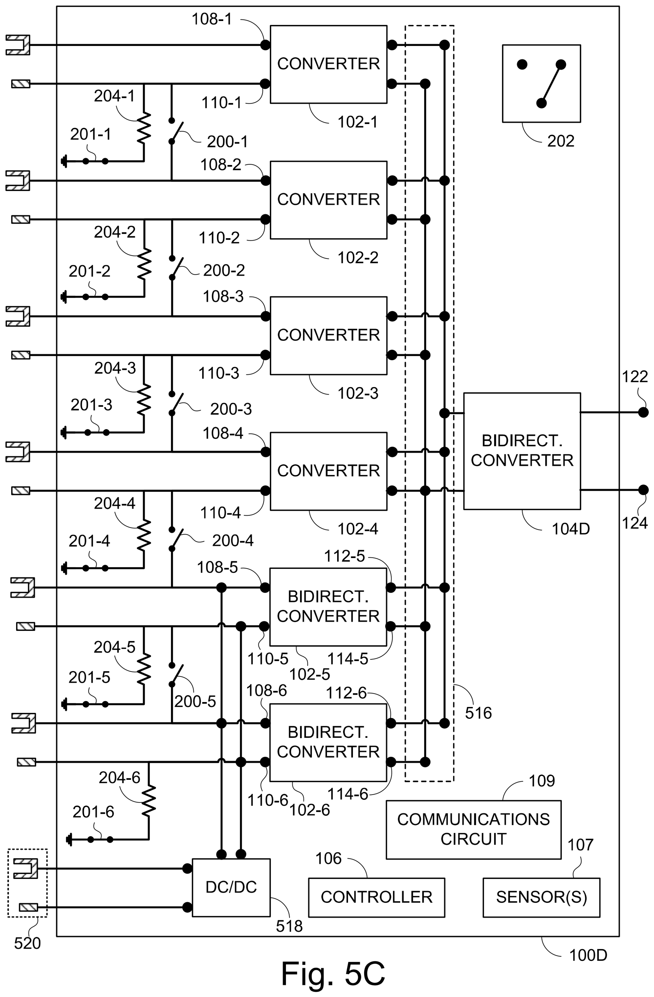

According to the disclosure herein, and with reference to Fig. 5C, power device 100D may include an additional converter circuitry 518, where the input terminals of converter circuitry 518 may be connected to terminals 108-5 and 110-5 of bidirectional power converter circuitry 102-5, and to terminals 108-6 and 110-6 of bidirectional power converter circuitry 102-6. Thus, converter circuitry 518 may convert power to a connector 520 (e.g., USB connector), connected to the output terminals of power converter circuitry 518, regardless of the source of the power (e.g., from PV generators, or from a power distribution grid connected at terminals 122 and 124). According to another example, converter circuitry 518 may be a DC-AC converter circuitry and connector 520 may be an electrical outlet. According to the disclosure herein, converter circuitry 518 may be a bidirectional power converter circuitry and connector 520 may be connected to a storage device.

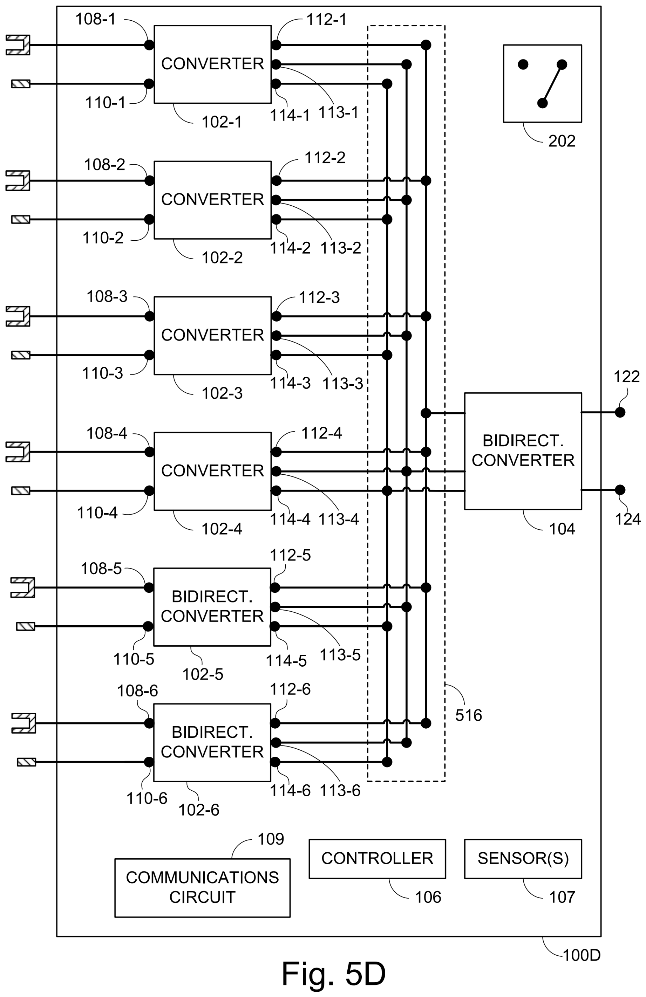

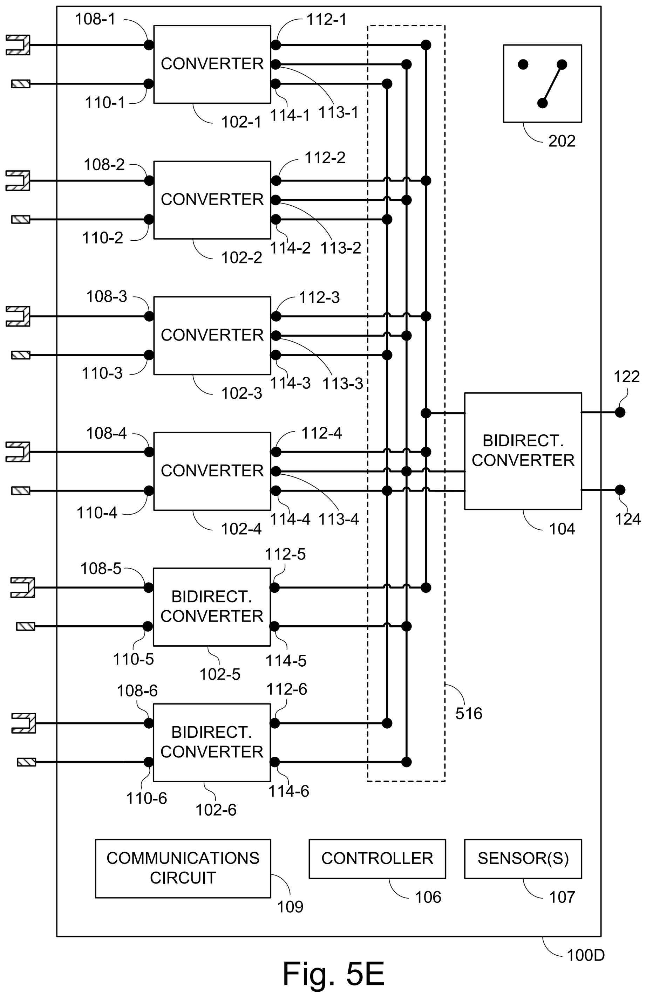

As mentioned above, a power system according to the disclosure herein may include power converter circuitries with two terminals (e.g., positive and negative) or three terminals (e.g., positive, negative and neutral). With reference to Fig. 5D, each of power converter circuitries 102-1 through 102-6 may include three output terminals, a positive output terminal (output terminals 112-1 through 112-6), a negative output terminal (output terminals 114-1 through 114-6), and neutral output terminals (output terminals 113-1 through 113-6). In such cases, bus 516 may include three lines, a positive line, a negative line, and a neutral line. Additional bidirectional power converter circuitry 104 may be a multi-level inverter (e.g., 3-level neutral point clammed inverter). Power converter circuitries 102-1 through 102-6 may each produce a positive voltage between the corresponding positive terminal and neutral terminal, and a negative voltage between the corresponding negative terminal and neutral terminal. With reference to Fig. 5E, each of power converter circuitries 102-1 through 102-4 may include three output terminals and power converter circuitries 102-5 and 102-6 may include two output terminals (e.g., similar to as described above with reference to Figs. 5A, 5B, and 5C). In such cases, bus 516 may include three lines. Power converter circuitries 102-5 and 102-6 may provide a positive voltage between the corresponding output terminals. Since each of power converter circuitries 102-5 and 102-6, include two output terminals, in the configuration shown in Fig. 5E: positive output terminal 112-5 of power converter circuitry 102-5 is coupled to the positive DC line and negative output terminal 114-5 is connected to the neutral line. Positive output terminal 112-6 of power converter circuitry 102-6 is coupled to the negative DC line in bus 516 and negative output terminal 114-6 is connected to the neutral line. Thus, bidirectional power converter circuitries 102-5 and 102-6, generate together a positive voltage between the positive DC line and the neutral DC line, and a negative voltage between the negative DC line and the neutral DC line. It is noted that in Figs. 5D and 5E, some features of power device 100D which are shown in Figs. 5A, 5B, and/or 5C are omitted for the sake of the clarity of the figures. However, this should not be considered as limiting. It is understood that the examples shown in Figs. 5D and 5E may include other features shown in the disclosure herein.

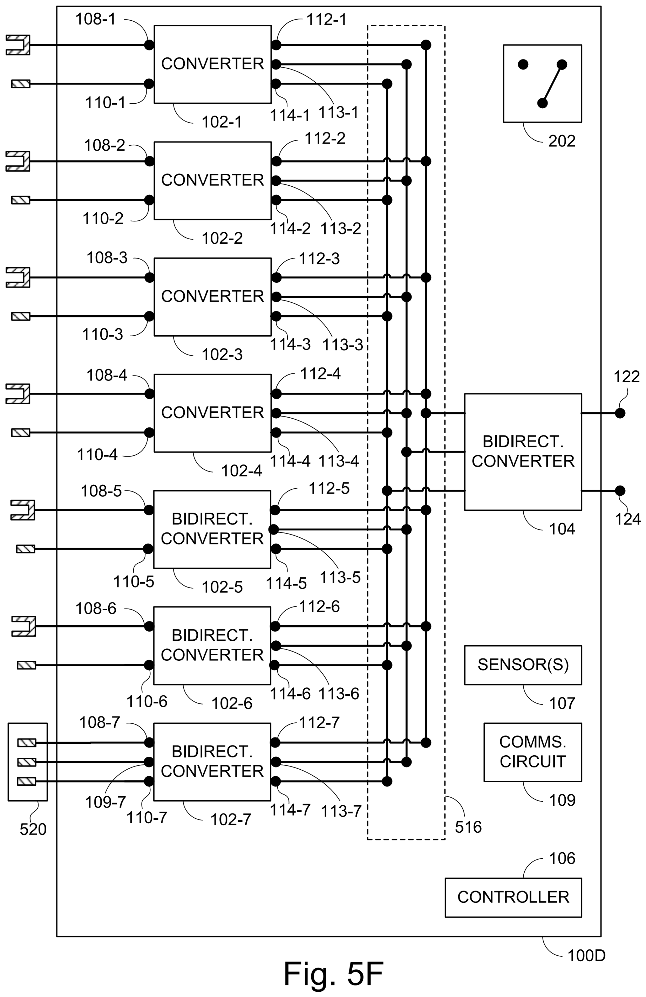

With reference to Fig. 5F, power device 100D shows a configuration similar to the configuration shown in Fig. 5D, and which includes an additional bidirectional power converter circuitry 102-7. Bidirectional power converter circuitry 102-7 includes a positive output terminal 112-7 connected to the positive DC line of bus 516, a negative output terminal 114-7 connected to the negative DC line of bus 516, and a neutral output terminal 113-7 connected to the neutral DC line of bus 516. Bidirectional power converter circuitry 102-7 further includes a positive input terminal 108-7, a negative input terminal 110-7, and a neutral output terminal 109-7. Positive input terminal 108-7, negative input terminal 110-7, and neutral output terminal 109-7 may be connected to a second bus 520 via which bidirectional power converter circuitry 102-7 may be connected to a storage device.

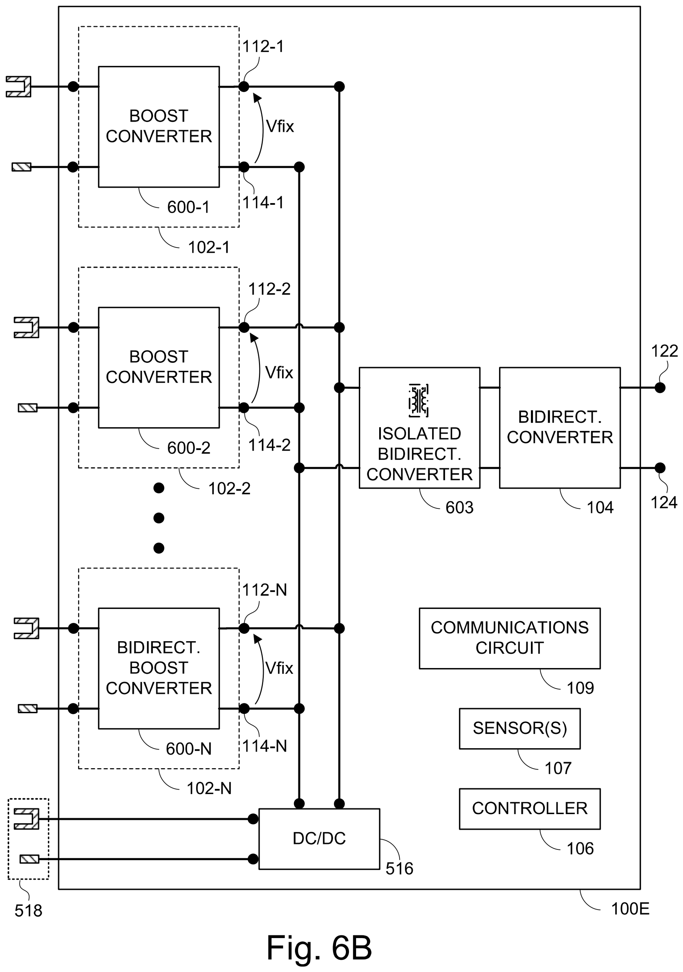

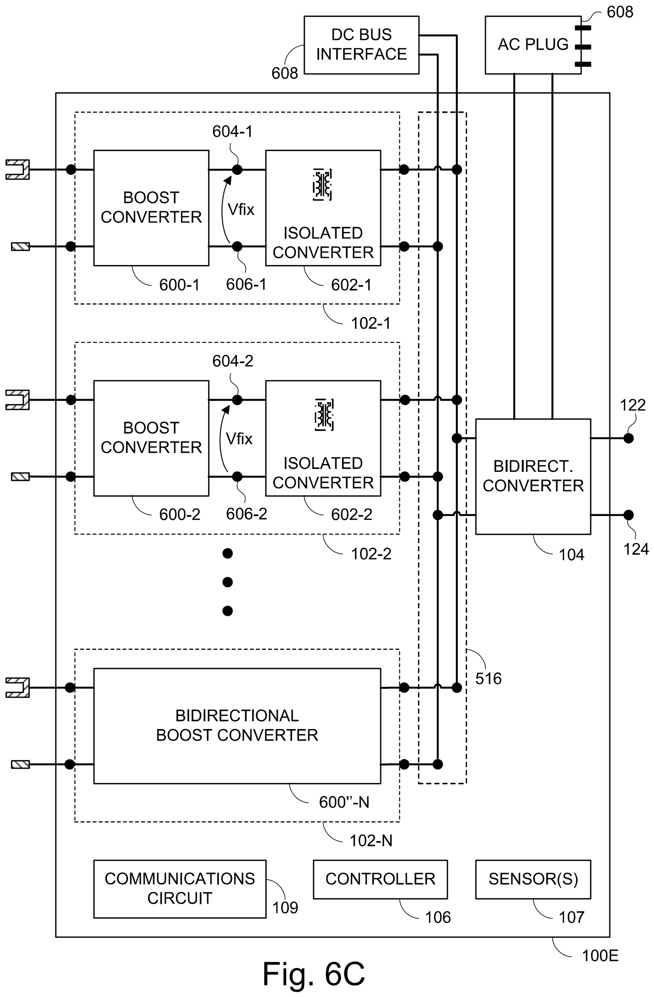

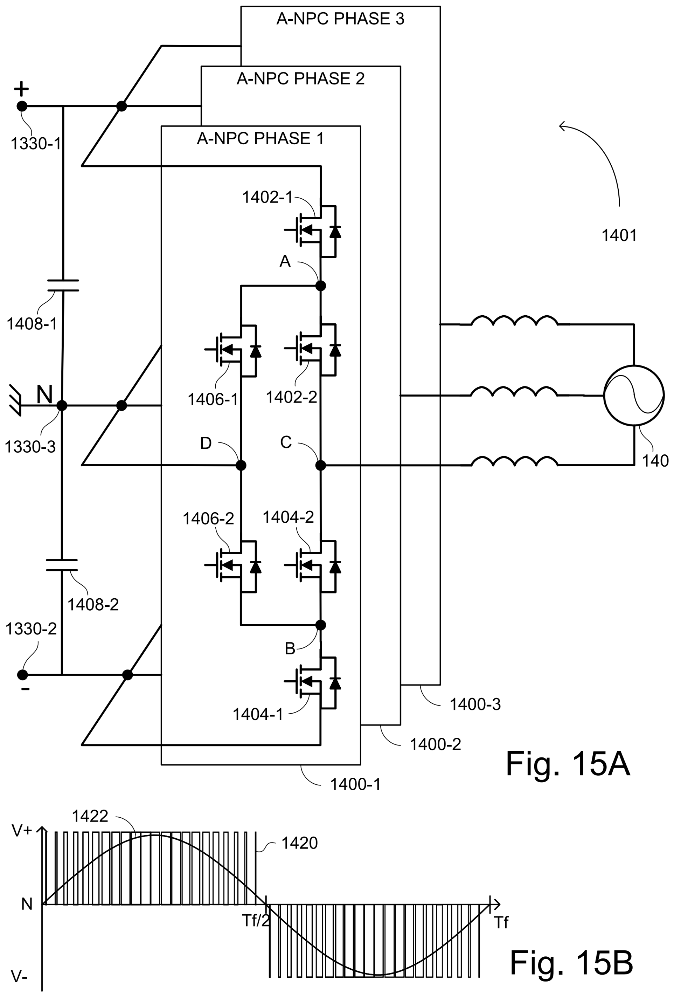

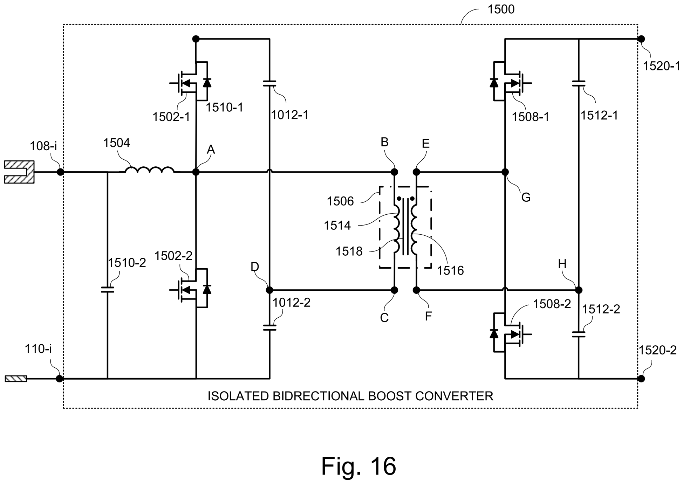

Reference is now made to Figs. 6A, 6B, and 6C. With reference to Figure 6A shows an example of power device 100E in which each of power converter circuitries 102 comprise a boost converter 600 and isolated converter 602 (e.g., an isolated LLC converter circuitry). Bidirectional converter circuitries (e.g., bidirectional power converter circuitries 102-5, 102-6, and/or 102-7 in Figs. 5A-5F) may comprise a bidirectional boost converter 600' and an isolated bidirectional converter circuitry 602' (e.g., a dual active bridge (DAB)). For example, boost converter 600-i may be a synchronous boost converter, which increases (boosts) an input voltage in the first conversion direction (toward terminals 604-i and 606-i), and decreases (bucks) the voltage in the second conversion direction (from bus 516 toward terminals 604-i and 606-i). Such a bidirectional boost converter may be isolated (e.g., using a transformer) as further explained below in conjunction with Fig. 15. Isolated bidirectional converter 602' may be a Dual Active Bridge converter further explained below in conjunction with Fig. 16. Each boost converter 600-1 through 600'-N may be coupled with a corresponding isolated converter circuitry 600-1 through 600'-N at corresponding terminals 604-1 through 604-N and 606-1 through 606-N.

A numerical example of the operation of power device 100E as shown in Fig. 6A is as follows: It may be understood that this example facilitates the explanation and is by no means limiting. In this numerical example, power device 100E may be configured in the first configuration, and each power converter circuitry 102-1 through 102-N may be connected to a corresponding PV generator at the corresponding terminals 108-1 through 108-N and 110-1 through 110-N. Controller 106 may control each of boost converters 600-1 through 600-N to draw power from the corresponding PV generator at an MPP of the corresponding PV generator and produce fixed voltage, Vfix, between terminals the corresponding terminals 604-1 through 604-N and 606-1 through 604N. For example, Vfix may be on the order of tens of volts (e.g., 50V, 60V, 80V). Each of isolated converters 602-1 through 602'-N may convert Vfix to a voltage compatible for producing a grid voltage (e.g., 380V, 400V, 800V), at bus 516. It is noted that isolated converters 602-1 through 602-N may include a transformer. Thus, each of isolated converters 602-1 through 602-N may be configured to convert Vfix to a voltage compatible for producing a grid voltage using the transformer winding ratio. Since both the input voltage and the output voltage of each of isolated converters 602-1 through 602'-N may be substantially constant, controller 106 may control isolated converters 602-1 through 602-N using an open control loop. In some cases, a closed control loop may be used. Additional bidirectional converter circuitry 104 may convert the voltage from converters 102-1 through 102-N to an AC voltage (e.g., 230V rms) to provide to load 140 (Figs. 4A-4D).

In the example shown in Fig. 6A power device 100E may further include an Alternating Current (AC) plug 608 and a DC bus interface 610. For example, AC plug 608 may be coupled to additional bidirectional converter circuitry 104D and may be rated to provide power in the order of hundreds of Watts (e.g., 500W, 750W, 800W). In a residential setting, AC plug 608 may be configured to be plugged into an AC socket in a home, thereby directly providing power to the home power network (e.g., without the need to connect additional bidirectional converter circuitry 104D to a point of interconnect such as a power board). When using AC plug 608, controller 106 may control additional bidirectional converter circuitry 104D to produce power at the power rating of AC plug 608. DC bus interface 610 may provide a coupling point for DC loads and devices (e.g., a battery) which require a DC voltage at the rating of the voltage level provided on bus 516. With reference to Fig. 6B, since boost converters 600-1 through 600'-N produce the same fixed voltage, Vfix, isolated bidirectional converters 602-1 through 602'-N may be replaced with a single isolated bidirectional converter 603, where the inputs of the single isolated bidirectional converter 603 may be connected to the output terminals 112-1 through 112-N and 114-1 through 114-N of power converter circuitries 102-1 through 102-N.

With reference to Figure 6C, power converter circuitry 102-N includes a bidirectional boost converter 600". In such a configuration, the positive output terminals 112-N the negative output terminals 114-N of bidirectional boost converter 600" are coupled to power converter circuitry 104. In such a configurations a PV generator 116 may be connected to each or power converter 102-1 to 102-N-1, and a string 117 or a battery may be connected to bidirectional boost converter 600"-N.

In Figs. 1A, 1B, 1C, 2A, 2B, 2C, 3A, 3B, 4A-4E, 5A-5F, 6A-6C, the outputs of power converter circuitries 102 are connected in parallel. According to the disclosure herein, the outputs of power converter circuitries may be connected in series. Connecting the outputs in series facilitates an output voltage which is the sum of the output voltages from each of the power converter circuitries (as opposed to an output voltage that is the same for all of the power converter circuitries when the outputs are connected in parallel).

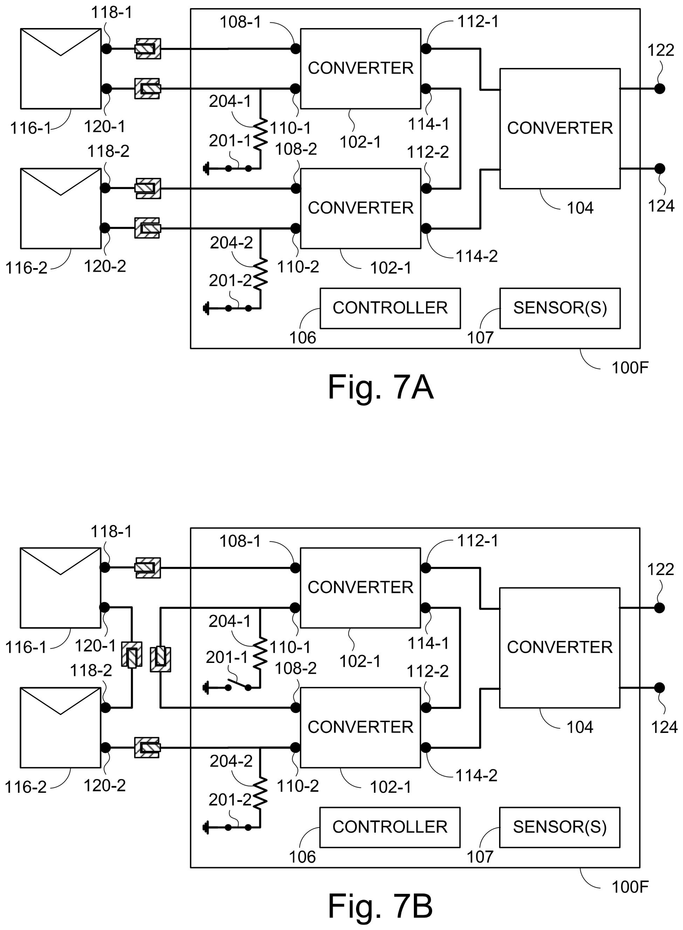

Reference is now made to Figs. 7A-7C which show a power device 100F according to the disclosure herein. In the example shown in Figs. 7A-7C, power device 100F includes two power converter circuitries, power converter circuitry 102-1 and power converter circuitry 102-2. In power device 100F, output terminal 114-1 of power converter 102-1 may be connected to output terminal 112-2 of power converter 102-2, thus connecting the outputs of power converter circuitries 102-1 and 102-2 in series.

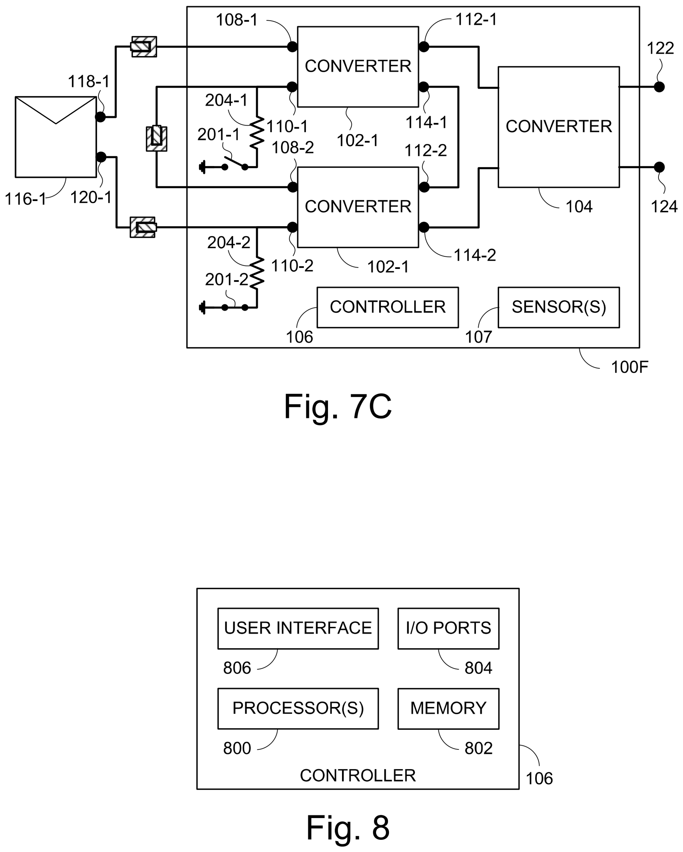

Fig. 7A shows power device 100F in the first configuration, where PV generator 116-1 is connected to terminals 108-1 and 110-1, and PV generator 116-2 is connected to terminals 108-2 and 110-2. Fig. 7B shows power device 100F in the second configuration, where PV generators 116-1 and 116-2 are connected in series to form a string of two PV generators. Terminal 110-1 of power converter 102-1 is connected to terminal 108-2 of power converter 102-2. Terminal 118-1 of PV generator 116-1 is connected to terminals 108-1 of power converter 102-1. Terminal 120-2 of PV generator 116-2 is connected to terminals 110-2 of power converter 102-2. The connections between the different input configurations may also be done using switches, similar to power device 100 shown in Figs. 2A and 2B. Fig. 7C shows power device 100F in the second configuration, where a single PV panel is connected to power device 100F. In Fig. 7C, terminal 118-1 of PV generator 116-1 is connected to terminal 108-1 of power converter 102-1, and terminal 120-1 of PV generator 116-1 is connected to terminal 110-2 of power converter 102-2. In the examples shown in Figs. 7A-7C, each power converter circuitry 102-1 and 102-2 may output a voltage on the order of tens of volts (e.g., 50V, 60V, 80V, etc.). The voltage between terminals 112-1 and 114-2 may be the sum (e.g., 100V, 120V, 160V, etc.) of the output voltages from the power converter circuitries 102-1 and 102-2. Thus, power device 100F enables the use of power sources (e.g., a single PV generator which may generate a low voltage) and produce a relatively high voltage output which may be used to generate power at a voltage suitable, for example, for load 140 (e.g., a power distribution grid, or a premises).

According to the disclosure herein, additional power converter circuitry 104 may be optional. Reference is now made to Fig. 8 which shows details of controller 106 or controller 136. Although Fig. 8 is described with reference to controller 106 or controller 136, the features of Fig. 8 may be included in other controllers disclosed herein. Controller 106 may be partially or fully implemented as one or more computing devices or may include one or more processors, such as an Application Specific Integrated Circuit (ASIC) controller, Field Programmable Gate Array (FPGA) controller, a microcontroller, digital signal processor (DSP) or a multipurpose computer. Controller 106 may be implemented using a plurality of synchronized controller circuitries, where each controller controls a corresponding power converter circuitry of power converter circuitries 102 (e.g., power converter circuitries 102-1 through 102-4). Controller 106 may comprise one or more processors 800, connected to memory 802 and Input/Output (I/O) ports 804. Controller 106 may comprise a user interface 806 (e.g., a keyboard, a mouse, a display, a microphone, a speaker, a switch, a touch screen, a touchpad, etc.). Memory 802 may store computer readable instructions as well as data (e.g., measurements from sensor(s) 107 or other parameters). I/O ports 804 may be configured to connect processor(s) 800 to different modules (e.g., sensor(s) 107, power converter circuitries [e.g., power converter circuitries 102-1 through 102-6], selection switch 202, or other modules such as a communications circuit). The one or more processor(s) 800 may execute the instructions, which may result in the processor(s) 800 performing one or more steps or functions as described herein that are attributed to one or both of controller 106 and processor(s) 800.

Sensor(s) 107, shown in Figs. 1A-1C, 2A-2C, 5A-5F, 6A-6B, 7A-7C, and sensor(s) 134 shown in Figs. 4A-4D may comprise: one or more voltage sensors (e.g., implemented by employing: a resistive or capacitive divider, a resistive or capacitive bridge, comparators, etc.), one or more current sensors (e.g., implemented by employing: a Current Transformer (CT) sensor, a Hall Effect sensor, a zero flux sensor, etc.), one or more frequency sensors, one or more temperature sensor(s), etc. Sensor(s) 107 may comprise combinations of one or more types (e.g., voltage, current, temperature, etc.) of sensors. For example, sensor(s) 107 may monitor voltage provided across output terminals 122 and 124, current flowing through output terminals 124 and 124, etc. Controller 106 may be coupled to and may receive measurements from sensor(s) 107, and may use these measurements to calculate values, such as: frequency, power, total harmonic distortion, etc. Sensor(s) 107 may also include sensors configured to monitor parameters (e.g., voltage, current, temperature, etc.) at power converter circuitries 102-1 through 102-4 and provide obtained measurements to controller 106. Power converter circuitries 102-1 through 102-4 may each include an individual set of sensor(s) and/or a controller for local control of each power converter circuitry.

Communications circuit 109 may be a receiver, a transmitter, or a transceiver. Communications circuit 109 may be configured to communicate signals with one or more other transmitters, receivers, or transceivers. Communications circuit 109 may be configured to communicate signals over a medium and based on a communications protocol. The communications protocol may define one or more characteristics of the signals and/or of communications using signals. The communications protocol may define one or more characteristics, such as: a transmission frequency or frequencies, a modulation scheme (e.g., Amplitude shift keying - ASK, Frequency shift keying - FSK, Quadrature Phase Shift Keying - QPSK, Quadrature Amplitude Modulation - QAM, ON OFF keying - OOK, etc.), a multiple access scheme (e.g., Time Division Multiple Access - TDMA, Frequency Division Multiple Access - FDMA, Code Division Multiple Access - CDMA, Carrier Sense Multiple Access - CSMA, Aloha, etc.), encoding/decoding schemes (e.g., Non Return to Zero - NRZ, Manchester coding, Block coding, etc.), etc. The medium may be a wired or a wireless medium. For example, a wired medium may be a dedicated communications cable (e.g., twisted pair, coaxial cable, etc.), power lines (e.g., arranged to connect power device 120 to a load or other power devices) etc.

When controlling power device 100 according to the first configuration (e.g., as shown in Figs. 1A, 2A, 3A, 4A, 5A, 6A, and 7A), sensor(s) 107 and/or sensor(s) 137 may measure a level of a voltage between the respective input terminals 108 and 110 of a power converter circuitry 102, and a level of a current flowing through one or more of input terminals 108 and 110 (which may be a panel current). Controller 106 may execute a MPP tracking (MPPT) algorithm (e.g., perturb and observe, incremental conductance, etc.) to individually increase (e.g., maximize) power drawn from the corresponding PV generator 116 (e.g., by determining a duty-cycle or a switching frequency used by the power converter circuitry).

When controlling power device 100 according the second configuration (e.g., as shown in Figs. 1B, 2B, 3B, 4B, 5B, 6B, and 7B), sensor(s) 107 and/or sensor(s) 137 may measure a level of a voltage of string 117 (e.g., voltage level between input terminals 108-1 and 110-4), and a level of a current flowing through one or more of input terminals 108-1 and 110-4 (which may be a string current). Controller 106 may execute a MPPT algorithm to increase (e.g., maximize) the power from string 117 that power converter circuitries 102-1 through 102-4 collectively converts (e.g., by collectively changing duty-cycles used by each of power converter circuitries 102-1 through 102-4). In some cases, power converter circuitries 102-1 through 102-4 may include input capacitances. In such cases, it may be beneficial to balance the input voltages of power converter circuitries 102-1 and 102-2 to reduce the probability of a situation that a voltage across one or more switches in one or more of power converter circuitries 102-1 through 102-4 exceeds the rating of the one or more switches. To that end, controller 106 may further change the duty cycle of each power converter circuitry 102-1 through 102-4 to balance the input voltages.

Although Figs. 1A, 1B, 1C, 2A, 2B, 2C, 4A-4E, 5A-5F, 6A, 6B, and 7A-7C described power device 100 as including a single controller 106 and sensor(s) 107 for all of the power converter circuitries 102, according to the disclosure herein device 100 may include control and sensor(s) for each power converter circuitry 102-i, configured to monitor and process measurements of the corresponding power converter circuitry 102-i, and to control the corresponding power converter circuitry 102-i.

The disclosure herein includes a description of various switches. According to the disclosure herein, such switches may be, for example: metal oxide semiconductor field effect transistors (MOSFETs), bipolar junction transistors (BJTs) insulated-gate bipolar transistors (IGBTs), Gallium Arsenide (GaAs) field effect transistors (FETs), Gallium Nitride (GaN) FETs, Diacs, Triacs, etc. The choice of a specific type of switch may be based on functionality, voltage rating, current rating, frequency of operation, etc.

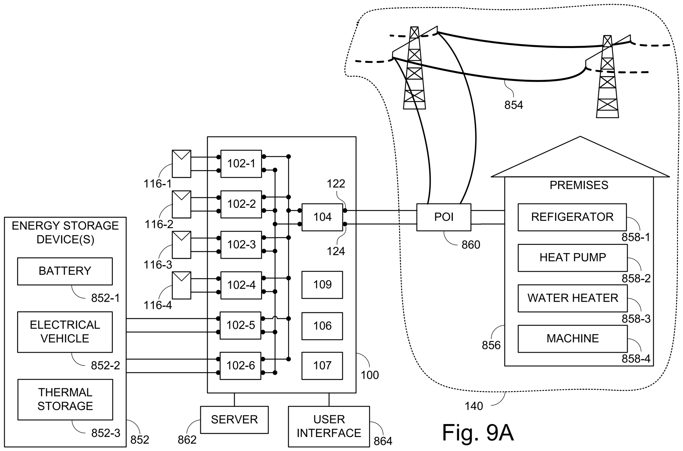

A power device 100 according to the disclosure herein (as may be described above in conjunction with Figs. 1A-1C, 2A-2C, 3A-3B, 5A-5F, 6A-6B, 7A-7B) may be used in various settings. Reference is now made to Fig. 9A, which shows an example of use of power device 100 according to the disclosure herein in a residential setting. In the example shown in Fig. 9A, each power converter circuitry 102-1 through 102-4 may be connected to a corresponding PV generator 116-1 through 116-4. Each PV generator 116-1 through 116-4 may be able to generate power on the order of hundreds of Watts or higher (e.g., 300W, 450W, 650W, 800W). Bidirectional power converter circuitries 102-5 and 102-6 may be coupled to one or more storage device(s) 852. A storage device 852 may include one or more energy storage device(s) having a corresponding energy storage capacity. For example, energy storage device 852 may include one or more of: a battery 852-1, an electrical vehicle 852-2, a thermal storage device 852-3, etc. For example, in residential settings, battery 852-1, electrical vehicle 852-2, and/or a thermal storage device 852-3 may each have an energy storage capacity on the order of thousands or tens of thousands of watts hours (e.g., 5 kWh, 10kWh, 20kWh, 50kWh, etc.), and may be charged and discharged at a rate of a few kilo Watts (e.g., 2kW, 5kW, etc.). Thus, power device 100 may be capable of processing power on the order of thousands of kilo Watts (e.g., 3kW, 4kW, 6kW, etc.). For example, a battery 852-1 may be coupled to bidirectional power conversion circuity 102-5 and electrical vehicle 852-2 may be coupled to bidirectional power conversion circuity 102-6. As shown In the example in Fig. 9A, load 140 may include a utility grid 854 and a premises 856 (e.g., a home, a warehouse). Premises 856 may include various loads, such as: a refrigerator 858-1, a heat pump 858-2 (e.g., an air condition), a water heater 858-3, a machine 858-4 (e.g., a mixer), etc. Additional power converter circuitry 104 may be connected to load(s) 140 via a point of interconnection (POI) 860. POI 860 may comprise a power board and/or a meter. In the example shown in Fig. 9A, power device 100 may further be configured to be connected to a server 862 (e.g., via communications circuit 109) and to a user interface 864 (e.g., via I/O ports 804 or communications circuit 109). Such a connection may facilitate various services such data analysis and data display, energy storage management, home management, etc.

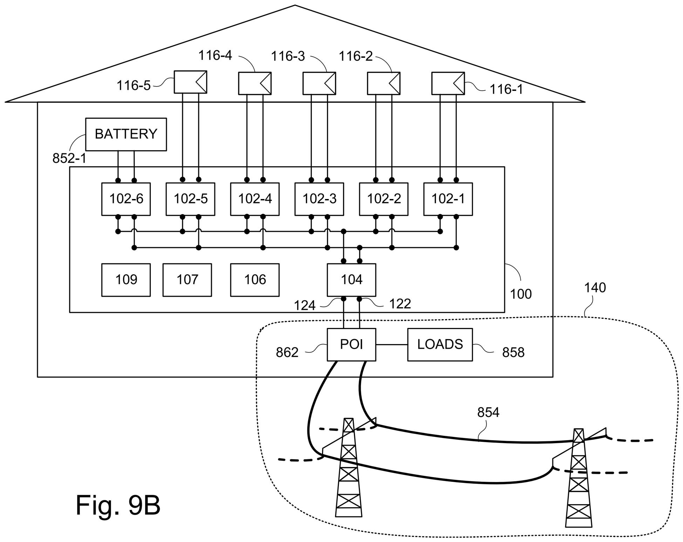

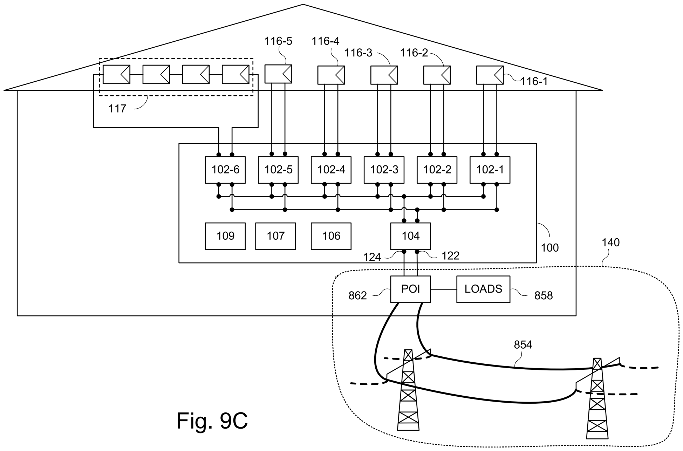

Reference is now made to Fig. 9B, which shows an example of power device 100 used in a residential setting. In the example shown in Fig. 9B, power converter circuitries 102-1 through 102-5 may each be connected to a corresponding PV generator 116-1 through 116-5. Bidirectional power converter circuitry 102-6 may be coupled to a battery 852-1. In the example shown in Fig. 9B, PV generators 116-1 through 116-5 are installed on a roof of a home. It is noted that one or more PV generators 116-1 through 116-5 may be installed on a balcony, a yard, etc. Reference is now made to Fig. 9C, which shows an example of power device 100 used in a residential setting. In the example shown in Fig. 9C is similar to the example in Fig. 9B except that a string 117 of PV generators is connected to bidirectional power converter circuitry 102-6. The configuration of power device 100 shown in Figures 9B and 9C may be similar to the configuration of power device 100 of Figure 6C.

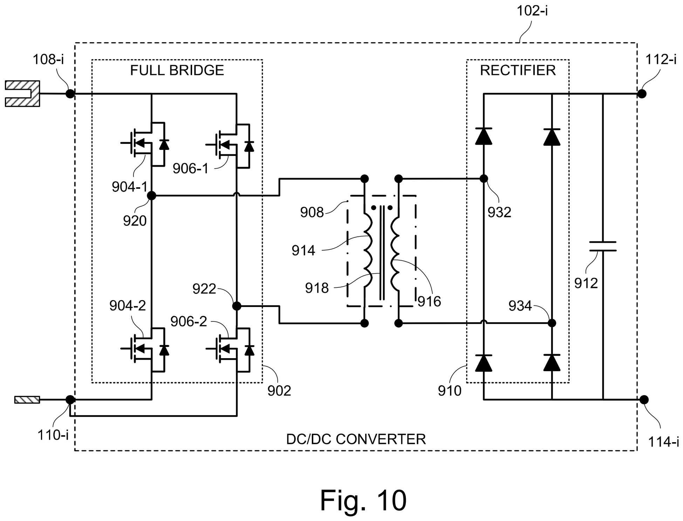

As mentioned above, power converter circuitries 102 (e.g., power converter circuitries 102-1 through 102-6) may be DC-DC converter circuitries and additional power converter circuitry 104 may be a DC-to-AC converter circuitry. Reference is now made to Fig. 10, which shows an example of power converter circuitry 102 as a DC-DC converter circuitry which may be used in any power device described in the disclosure herein. In the example shown in Fig. 10, power converter circuitry 102 may include a full-bridge 902, a transformer 908, a rectifying bridge 910, and a capacitor 912. Full-bridge 902 may be coupled to input terminals 108 and 110 and to transformer 908. Transformer 908 may be coupled to rectifying bridge 910. Rectifying bridge 910 and capacitor 912 may be coupled between output terminals 112 and 114. Full bridge 902 comprises switches 904-1, 904-2, 906-1, and 906-2. In Fig. 10 switches 904-1, 904-2, 906-1, and 906-2 are shown as N-channel MOSFETs. The drains of switches 904-1 and 906-1 may be coupled to positive input terminal 108. The sources of switches 904-2 and 906-2 may be coupled to negative input terminal 110. The source of switch 904-1 may be coupled to the drain of switches 904-2 at a connection point 920 (e.g., a node or a terminal). The source of switch 906-1 is coupled to the drain of switches 906-2 at a connection point 922. The gates of the switches may be connected to controller. Transformer 908 may comprise primary side windings 914 and secondary side windings 916 both wound around different areas of a core 918. Primary side windings 914 may be coupled between connection point 920 and connection point 922. Secondary side windings 916 may be coupled between a connection point 932 and a connection point 934 in rectifying bridge 910. Transformer 908 may serve to enable series and/or parallel connection of the output terminals of power converter circuitries 102-1 through 102-4 by isolating the voltage across the secondary side windings 916 (e.g., transformer output voltage) from the voltage across the primary side windings 914 (e.g., transformer input voltage). Transformer 908 may also condition a magnitude of an output voltage provided at terminals 112-i and 114-i. A ratio between a number of primary side windings 914 and a number of secondary side windings 916 may determine a transformer voltage converter ratio. For example, where a voltage gain of 4:1 is desired, the number of secondary windings 916 may be four times the number of primary windings 914. Where a desired voltage conversion ratio is 1:1 (i.e., the transformer is used primarily as an isolating transformer) the number of primary side windings may be the same as the number of secondary side windings. Transformer 908 may be a tapped transformer where the transformer ratio may be vary (e.g., using switches).

Full-bridge 902 may be operated (e.g., by controller 106) such that switches 904-1 and 906-2 are turned ON (e.g., to a conducting state) together and OFF (e.g., to a non-conducting state) together, and similarly, switches 904-2 and 906-1 are turned ON together and OFF together. Full-bridge 902 may be switched at a frequency of several kHz up to hundreds of kHz or even MHz, to create a high-frequency pulsed voltage at the input of transformer 908. The duty cycle, including the time during which the switches are ON, may determine the conversion ratio between the voltage across terminals 112-i and 114-i, and the voltage across terminals 108-i and 110-i. On a secondary side of transformer 908, rectifier 910 and capacitor 912 may rectify the pulsed voltage to a substantially DC voltage.

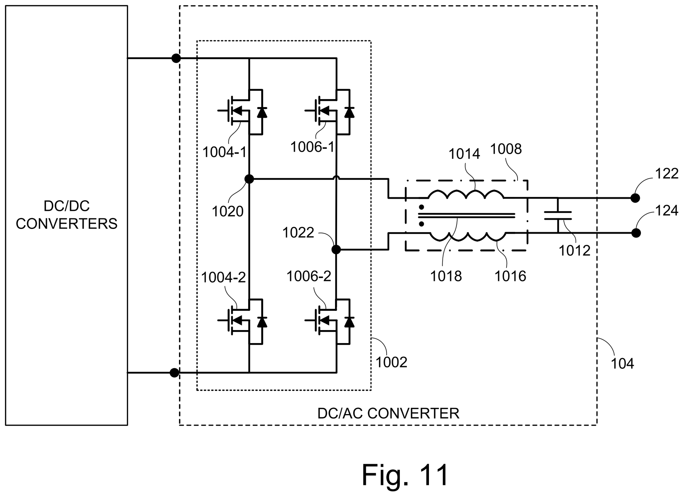

Reference is now made to Fig. 11, which shows an example of additional power converter 104 or additional power converter 504 as a DC-to-AC converter circuitry, which may be used in any power device described in the disclosure herein. In the example shown in Fig. 11, additional power converter circuitry 104 includes a full-bridge 1002, a coupled inductor 1008, and a capacitor 1012. Full-bridge 1002 is coupled to power converter circuitries (e.g., power converter circuitries 102-1 through 102-6, as shown in Figs. 1A-1C, 2A-2C, 3A-3B, 5A-5F, 6A-6B, 7A-7B) using a first plurality of terminals, and to coupled inductor 1008 using a second plurality of terminals 1020, 1022. Coupled inductor 1008 is coupled to capacitor 1012. Full bridge 1002 comprises switches 1004-1, 1004-2, 1006-1, and 1006-2, which are shown as N-channel MOSFET transistors in Fig. 11. The drains of switches 1004-1 and 1006-1 may be coupled to positive output terminals 112-1 through 112-4 of power converter circuitries 102-1 through 102-4 via a terminal of the first plurality of terminals (e.g., in a parallel output arrangement). The sources of switches 1004-2 and 1006-2 may be coupled to negative output terminals 114-1 through 114-2 via a different terminal of the first plurality of terminals (e.g., in the parallel output arrangement). The source of switch 1004-1 is coupled to the drain of switches 1004-2 at a connection point 1020 (e.g., a node or a terminal). The source of switch 1006-1 is coupled to the drain of switches 1006-2 at a connection point 1022. The gates of the switches may be connected to controller. Coupled inductor 1008 may comprise first windings 1014 coupled between connection point 1020 and capacitor 1012 and second windings 1016 coupled between connection point 1022 and capacitor 1012. First winding and second winding are both wound around different areas of a core 1018. Capacitor 1012 may be coupled between first winding 1014 and second winding 1016. According to other examples, a non-coupled inductor may be utilized instead of coupled inductor 1008.

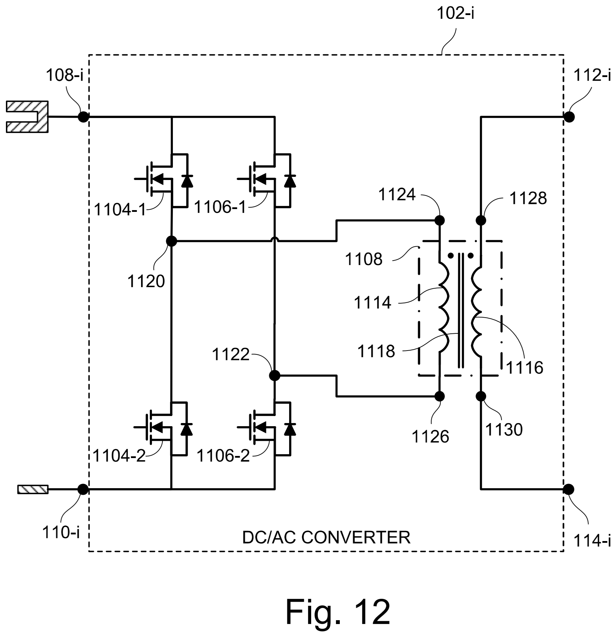

As mentioned above, power converter circuitries 102-1 through 102-4 may be DC-to-AC converter circuitries and additional power converter circuitry 104 may be an AC-AC converter circuitry. Reference is now made to Fig. 12, which shows an example of power converter circuitry 102 as a DC-to-AC converter circuitry, which may be used in any power device described in the disclosure herein. A difference between the example in Fig. 12 and the example in Fig. 10 is that power converter circuitry 102-i, in Fig. 12, does not include a rectifying bridge (such as, rectifying bridge 910) and capacitor 912. Another difference is that the secondary side windings of Fig. 12 may be coupled between positive output terminal 112-i and negative output terminal 114-i. Switches 1104-1 through 1106-2 of Fig. 12 may be operated similarly to switches 904-1 through 906-2 of Fig. 10.

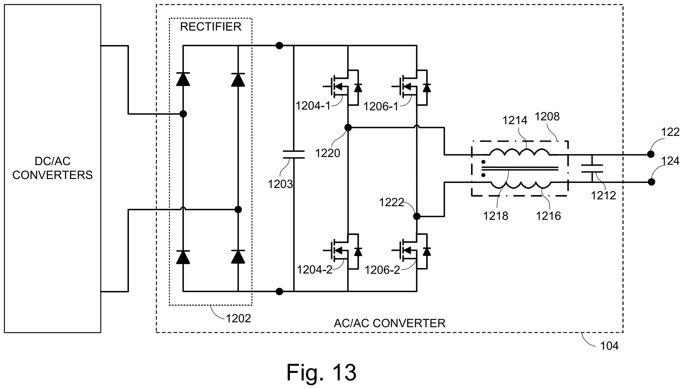

Reference is now made to Fig. 13, which shows an example of additional power converter circuitry 104 as an AC-AC converter circuitry, which may be used in any power device described in the disclosure herein. A difference between the example in Fig. 13 and the example in Fig. 11 is that power converter circuitry 104 of Fig. 13 includes a rectifying bridge 1202, and a capacitor 1203, which collectively may rectify a combined output of parallel-connected DC/AC converter circuitries 102 (e.g., similar to power converter circuitry 102 as depicted in Fig. 12).

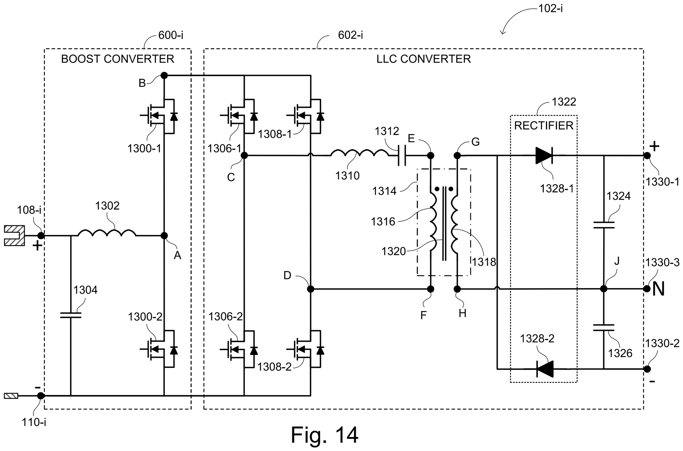

As described in conjunction with Figs. 6A-6C, power converter circuitry 102-i in power device 100 may include a boost converter 600-i and an isolated converter circuitry 602-i. As mentioned above, isolated converter circuitry 602-i may be an LLC converter circuitry. Reference is now made to Fig. 14, which shows power converter circuitry 102-i which includes a boost converter 600-i and an LLC converter circuitry 602-i. Boost converter 600-i, may include switch 1300-1, switch 1300-2, inductor 1302 and capacitor 1304. Capacitor 1304 is coupled between terminals 108-i and terminals 110-i. Inductor 1302 is coupled between terminals 108-i and a connection point A (e.g., a node or a terminal). The drain of switch 1300-1 is coupled to a connection point B. The sources of switches 1300-2 is coupled to terminal 110-i. The source of switch 1300-1 is coupled to the drain of switches 1300-2 at connection point A. The gates of the switches may be connected to controller (e.g., via gate drivers).

LLC converter circuitry 602-i may include switches 1306-1, 1306-2, 1308-1, and 1308-2, a resonant inductor 1310, a resonant capacitor 1312, a transformer 1314, a rectifier 1322, a first output capacitor 1324, and second output capacitor 1326. Transformer 1314 may include primary windings 1316 and secondary windings 1318 both wound around different areas of a core 1320. Rectifier 1322 may include a first diode 1328-1 and a second diode 1328-2. The drains of switches 1306-1 and 1308-1 may be coupled to connection point B. The sources of switches 1306-2 and 1308-2 may be coupled to negative input terminal 110-i. The source of switch 1306-1 may be coupled to the drain of switches 1306-2 at a connection point C. The source of switch 1308-1 may be coupled to the drain of switches 1308-2 at a connection point D. The gates of the switches may be connected to controller (e.g., via gate drivers). Resonant inductor 1310 may be coupled in series with resonant capacitor 1312. The series connection of resonant inductor 1310 and resonant capacitor 1312 may be coupled between connection point C and connection point E. Primary windings 1316 may be coupled between connection points E and F. Connection point F is coupled with connection point D, forming a single electrical node. Secondary windings 1318 may be coupled between connection points G and H. The anode of diode 1328-1 is coupled to connection point G and the cathode of diode 1328-1 is coupled to terminal 1330-1. The cathode of diode 1328-2 is coupled to connection point G and the anode of diode 1328-2 is coupled to terminal 1330-2. First output capacitor 1324 may be coupled between terminal 1330-1 and connection point J. Second output capacitor 1326 may be coupled between connection point J and terminal 1330-2. Connection points H and J are connected to terminal 1330-3, thus forming a single electrical node. In the example shown in Fig. 13, terminal 1330-1 may be a positive output terminal (+), terminal 1330-2 may be a negative output terminal (-), and terminal 1330-3 may be a neutral output terminal (N). Terminals 1330-1, 1330-2, and 1330-3 may be connected to additional power converter circuitry 104 or 504. Resonant inductor 1310, resonant capacitor 1312 and a leakage inductance of primary windings 1316 may form an LLC resonant circuit, which may have corresponding power gain frequency response, with a maximum power gain at the resonant frequency of the LLC resonant circuit. In power converter circuitry 102-i shown in Fig. 14, input terminals 108 may be referenced to a first reference potential, and terminals 1330-1, 1330-2, and 1330-3 may be referenced to a second reference.

Power converter circuitry 102-i shown in Fig. 14 may be operated (e.g., by controller 106) by controlling boost converter 601-i to convert power from terminals 108-1 and 110-i such that a voltage between connection point B and terminal 110-i is higher than the voltage between terminals 108-1 and 110-i. Controller 106 may further control switches of boost converter 601-i such that the voltage between connection point B and terminal 110-i is constant (e.g., Vfix in Figs. 6A and 6B). Controller 106 may control boost converter 600-i by controlling switch 1300-1 and switch 1300-2 in a complementary manner, at a frequency of several kHz up to hundreds of kHz or even MHz, and at a duty cycle corresponding to the conversion ratio between the voltage between connection point B and terminal 110-i, and the voltage between connection point B and terminal 110-i. Controller 106 may determine the duty cycle using, for example, Pulse Width Modulation (PWM) techniques (e.g., using a carrier signal and a reference signal). Furthermore, in cases in which a PV generator such as PV generator 116-i (as shown in Figs. 1A, 2A, and/or 4A) is connected at terminals 108-i and 110-i, controller 106 may determine a voltage between terminals 108-i and 110-i, Vmpp, which corresponds to the MPP of PV generator 116-i (e.g., by using an MPPT algorithm). Controller 106 may use Vmpp in determining the duty cycle for operating switches 1300-1 and switch 1300-2.

When controlling LLC converter circuitry 602-i, controller 106 may control switches 1306-1, 1306-2, 1308-1, and 1308-2 between an ON state (a conducting state) and an OFF state (a non-conducting state) such that switches 1306-1, 1308-2 are turned ON and OFF together, and switches 1308-1, 1306-2 are turned ON and OFF together. When controlling LLC converter circuitry 602-i, controller 106 may control switches 1306-1, 1306-2, 1308-1, and 1308-2 to turn ON and OFF at a frequency corresponding to the resonant frequency of the resonant circuit (e.g., the LLC circuit), and at a fixed duty cycle (e.g., 50%), thus generating a variable voltage (e.g., a pulsed voltage) between connection points E and F. Transformer 1314 (which may have a functionality similar to transformer 908 described above in conjunction with Fig. 9) may increase, due to the windings ratio, the level of the variable voltage between connection points E and F to a second variable voltage between connection points G and H. Rectifier 1322 along with capacitors 1324 and 1326 may rectify the variable voltage between connection points G and H, to generate a first DC voltage having a first polarity between terminals 1330-1 and 1330-3 (e.g., +400V), and a second DC voltage having a second polarity, opposite the first polarity, between terminals 1330-3 and 1330-2 (e.g., -400V). Thus, a transformer 1314 may have a winding ratio configured to increase the voltage by the winding ratio (e.g., N:1), but the voltage between terminals 1330-1 and 1330-2 may be increased by double the winding ratio (e.g., 2N). In some cases, when boost converter 600-i produces a constant voltage, Vfix, between connection point B and terminal 110-i, controller 106 may control LLC converter 602-i using an open control loop (e.g., without receiving feedback). Using an open control loop has an advantage of reducing the control complexity.

Terminals 1330-1 1330-2, and 1330-3 may be connected to additional power converter circuitry 104 or 504, which may be a Neutral Point Clamped (NPC) DC to AC converter circuitry (e.g., an inverter circuitry). In some cases, this inverter circuitry may be a three phase (3-phase) inverter circuitry. Reference is now made to Figs. 15A and 15B, which shows an example of additional power converter circuitry 104 (as shown in Figs. 1A-1B, 2A-2B, 4A-4D, and 7A-7C) and/or power converter circuitry 504 (as shown in Figs. 5A-5E, 6A-6B) as a 3-phase A-type NPC (A-NPC) inverter circuitry 1401, which may be used in any power device described in the disclosure herein (e.g., as power converter circuitry 104 or power converter circuitry 504). A-NPC inverter circuitry 1401 may include a plurality of A-NPC DC-AC converter circuitries. In the example of Fig. 15, NPC inverter circuitry 1401 includes 3 A-NPC DC-AC converter circuitries 1400-1, 1400-2, and 1400-3 (e.g., one A-NPC DC-AC converter circuitry for each phase of load 140, which may be a 3-phase load, such as a 3-phase grid). For the sake of simplicity of the explanation herein, the structure of only one A-NPC DC-AC converter circuitry 1400-1 is described. It is understood that the structures of other ANPC DC-AC converter circuitries 1400-2 and 1400-3 may be similar to or the same as A-NPC DC-AC converter circuitry 1400-1.

ANPC DC-AC converter circuitry 1400-1 includes switches 1402-1, 1402-2, 1404-1, 1404-2, 1406-1, and 1406-2. In Fig. 15A, switches 1402-1, 1402-2, 1404-1, 1404-2, 1406-1, and 1406-2 are shown as N-channel MOSFETs. The source of switch 1402-1, and the drains of switches 1402-2 and 1406-1 may be coupled to connection point A (e.g., a node or terminal). The drain of switch 1404-1, and the sources of switches 1404-2 and 1406-2 may be coupled to connection point B. The drain of switch 1404-2 and the source of switch 1402-2 may be coupled to connection point C. The drain of switch 1406-2 and the source of switch 1406-1 may be coupled to connection point D. The drain of switch 1402-1 may be coupled to terminal 1330-1 (also shown in Fig. 14) and the source of switch 1404-1 may be coupled to connection point 1330-2 (also shown in Fig. 14). Connection point D may be coupled to terminals 1330-3 (also shown in Fig. 14). The gates of the switches may be connected to controller (e.g., via gate drivers).

In operation, controller 106 may control switches 1402-1, 1402-2, 1404-1, 1404-2, 1406-1, and 1406-2 to generate, at connection point C, a three-level PWM power waveform, such as PWM power waveform 1420 shown in Fig. 15B. PWM power waveform 1420, shown in Fig. 15B, has three voltage levels, voltage level V+ from terminal 1330-1, neutral voltage level N (e.g., which may provide a 0V reference), from terminal 1330-3, and voltage level V- from terminal 1330-2 (e.g., which may be equal in amplitude to voltage level V+ but with an opposite polarity). For example, to generate voltage level V+ at connection point C, controller 106 may control switches 1402-1 and 1402-2 to be ON, and control switches 1404-1, 1404-2, 1406-1, and 1406-2 to be OFF. Thus, terminal 1330-1 is connected to connection point C. To generate voltage level N at connection point C (according to a first option), controller 106 may control switches 1402-2 and 1406-1 to be ON, and control switches 1402-1, 1404-1, 1404-2, and 1406-2 to be OFF. To generate voltage level N at connection point C (according to a second option), controller 106 may control switches 1404-2 and 1406-2 to be ON, and control switches 1402-1, 1402-2, 1404-1, and 1406-1 to be OFF. In both of these options, terminal 1330-3 is connected to connection point C. The choice between the two options for generating voltage level N at connection point C is further explained below. To generate voltage level V- at connection point C, controller 106 may control switches 1401-1 and 1404-2 to be ON, and control switches 1402-1, 1402-2, 1406-1, and 1406-2 to be OFF, thus connecting terminal 1330-2 to connection point C.

To generate a sine wave, such as the sine wave 1422, of a period Tf, controller 106 may control switches 1402-1, 1402-2, 1404-1, 1404-2, 1406-1, and 1406-2 to alternately generate voltage level V+ and voltage level N at connection point C during a first half of the period Tf (e.g., from 0 to Tf/2), and alternately generate voltage level V- and voltage level N at connection point C during a second half of the period Tf (e.g., from Tf/2 to Tf). During the first half period of the sine wave, controller 106 may use the above mentioned first option for generating voltage level N at connection point C, thus maintaining switch 1402-2 ON during the first half period of the sine wave (which may reduce switching losses, since switch 1402-2 is not switched OFF during the first half period). During the second half period of the sine wave, controller 106 may use the above mentioned second option to generate voltage level N at connection point C, thus maintaining switch 1404-2 ON during the second half period of the sine wave (which may reduce switching losses, since switch 1404-2 is not switched OFF during the second half period). Controller 106 may similarly control A-NPC DC-AC converter circuitry 1400-2 and 1400-3 to generate corresponding sine waves. Controller 106 may control A-NPC DC-AC converter circuitries 1400-1, 1400-2, and 1400-3 to generate corresponding sine waves, where the sine waves are shifted by 120 degrees with respect to each other, thus generating a 3-phase power waveform. For example, controller 106 may use phase shifted sine waves as reference signals when determining the PWM signal for A-NPC DC-AC converter circuitries 1400-1, 1400-2, and 1400-3.

A power device according to the disclosure herein (e.g., power device 100) may operate in various settings and configurations. The power network at the premises or the grid (e.g., public utility grid) to which power device 100 may connect to may be a single phase, dual phase, or 3-phase power network. According to the disclosure herein, and still referring to Fig. 15A, controller 106 may control NPC inverter circuitry 1401 to provide single phase, dual phase, or 3-phase power. For example, to provide single phase power, controller 106 may control only one of A-ANPC DC-AC converter circuitries 1400-1, 1400-2, or 1400-3 to produce output power. In such a case, one or more of A-ANPC DC-AC converter circuitries 1400-1, 1400-2, and 1400-3 may be rated for the maximum power rating of power device 100 (e.g., in case they are the AC converter circuitry selected to output power). For example, to provide single phase power, controller 106 may control all of A-ANPC DC-AC converter circuitries 1400-1, 1400-2, and 1400-3 in phase. For example, to provide dual phase power, controller 106 may control only two of A-ANPC DC-AC converter circuitries 1400-1, 1400-2, and 1400-3. In such a case, two or more of A-ANPC DC-AC converter circuitries 1400-1, 1400-2, and 1400-3 may be rated for half the maximum power rating of power device 100.

As described above, a power device according to the disclosure herein may include a bidirectional boost converter. Reference is now made to Fig. 16 which shows a bidirectional boost converter 1500 according to the disclosure herein.

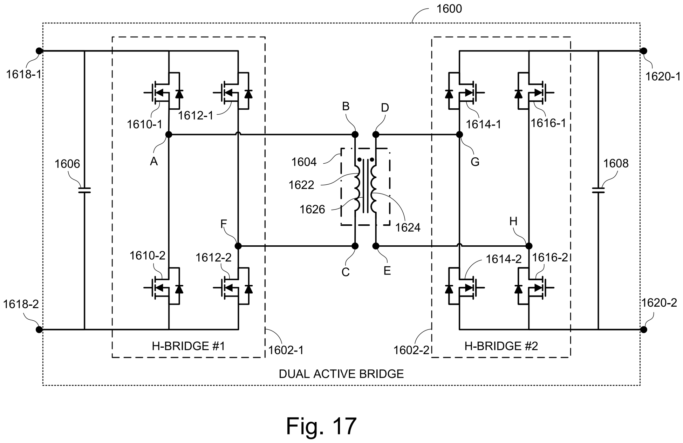

As described above, a power device according to the disclosure herein may include a dual active bridge (DAB) circuitry. Reference is now made to Fig. 17, which shows a DAB circuitry 1600 which may be used as power converter circuitry (e.g., power converter circuitry 104, or power converter circuitry 102-5, 102, and/or 602). DAB circuitry 1600 may be similar to DC/DC converter circuitry 102-i shown in Fig. 10 except that rectifier 910 is replaced with a full-bridge, thus enabling bidirectional conversion of power. According to the disclosure herein, DAB circuitry 1600 may include a first full-bridge 1602-1, a second full-bridge 1602-2, a transformer 1604, a first capacitor 1606, and a second capacitor 1608. First full bridge 1602-1 and second full bridge 1602-2 are couped to transformer 1604. First full bridge 1602-1 may be coupled to terminals 1618-1 and 1618-2. Second full bridge 1602-2 may be coupled to terminals 1620-1 and 1620-2. According to aspects of the disclosure herein, an inductor (not explicitly depicted) may be coupled between transformer 1604 at Terminal B and terminal A. According to aspects of the disclosure, leakage inductance of transformer 1604 may be sufficient and an additional inductor might not be used.

As shown in Fig. 17, first full bridge 1602-1 may comprise switches 1610-1, 1610-2, 1612-1, and 1612-2. Second full bridge 1602-2 may comprise switches 1614-1, 1614-2, 1616-1, and 1616-2. Transformer 1604 may comprise primary side windings 1622 and secondary side windings 1624 both wound around different areas of a core 1626. In Fig. 17, switches 1610-1, 1610-2, 1612-1, 1612-2, 1614-1, 1614-2, 1616-1, and 1616-2 are shown as N-channel MOSFETs. The drains of switches 1610-1 and 1612-1 may be coupled to terminal 1618-1. The sources of switches 1610-2 and 1612-2 may be coupled to terminal 1618-2. The source of switch 1610-1 may be coupled to the drain of switches 1610-2 at connection point A (e.g., a node or a terminal). The source of switch 1612-1 may be coupled to the drain of switch 1612-2 at connection point F. The drains of switches 1614-1 and 1616-1 may be coupled to terminal 1620-1. The sources of switches 1614-2 and 1614-2 may be coupled to terminal 1620-2. The source of switch 1614-1 may be coupled to the drain of switches 1614-2 at connection point G. The source of switch 1616-1 may be coupled to the drain of switch 1616-2 at connection point H. The gates of the switches may be connected to controller.

Primary side windings 1622 may be coupled between connection point B and connection point C. Connection points A and B may be connected to each other forming a single electrical node. Connection points C and F may be connected to each other forming a single electrical node. Secondary side windings 1624 may be coupled between a connection point D and connection point E. Connection points D and G may be connected to each other forming a single electrical node. Connection points E and H may be connected to each other forming a single electrical node. Transformer 908 may also condition a magnitude of an output voltage provided at terminals 1618-1 and 1618-2, or at terminals 1620-1 and 1620-2 (e.g., depending on the conversion direction). A ratio between a number of primary side windings 1622 and a number of secondary side windings 1624 may determine a transformer voltage converter ratio.

DAB circuitry 1600 may be operated (e.g., by controller 106) such that switches 1610-1, 1612-2, 1614-1, and 1616-2 are turned ON together and turned OFF together. Similarly, switches 1612-1, 1610-2, 1616-1, and 1614-2 are turned ON together and turned OFF together. DAB circuitry 1600 may be switched at a frequency of several kHz up to hundreds of kHz or even MHz, to create a high-frequency pulsed voltage at the windings of transformer 1604. DAB circuitry 1600 may converter power from terminals 1618-1 and 1618-2 to terminals 1620-1 and 1620-2, or from terminals 1620-1 and 1620-2 to terminals 1618-1 and 1618-2. The duty cycle, including the time during which the switches are ON, may determine the conversion ratio between the voltage across terminals 1618-1 and 1618-2, and the voltage across terminals 1620-1 and 1620-2.

When converting power from terminals 1618-1 and 1618-2 to terminals 1620-1 and 1620-2, second full bridge 1602-2 and second capacitor 1608 may be configured to rectify the pulsed voltage provided across secondary windings 1624 to a substantially DC voltage across terminals 1620-1 and 1620-2. When converting power from terminals 1620-1 and 1620-2, to terminals 1618-1 and 1618-2, first full bridge 1602-2 and first capacitor 1606 may be configured to rectify the pulsed voltage provided across primary windings 1622 to a substantially DC voltage across terminals 1618-1 and 1618-2.

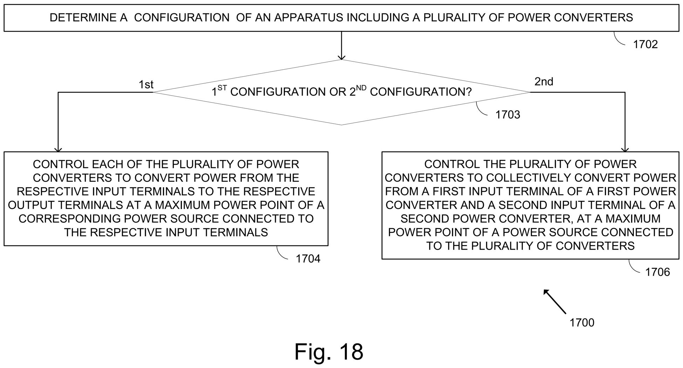

Reference is now made to Fig. 18 which shows a method 1700 for controlling a plurality of power converter circuitries according to the disclosure herein. In step 1702, controller 106 determines a desired mode of operation based on a configuration of the plurality of power converter circuitries such as power converter circuitries 102-1 through 102-6 and corresponding power sources (e.g., PV generators). If the power converter circuitries 102-1 through 102-6 are connected as shown in the panel configuration, controller 106 may determine a desired first mode of operation. If the power converter circuitries 102-1 through 102-6 are connected in the string configuration, controller 106 may determine a desired first mode of operation.

In step 1702, controller 106 may determine the configuration of power device 100. For example, controller 106 may determine a configuration of the power device (or plurality of power devices) and a desired mode of operation (e.g., for each power device) in various ways. For example, a configuration and desired mode may be communicated by a user (e.g., via a user interface, a control system, etc.). For example, a switch (e.g., switch 202) may be used to indicate (and/or create) a configuration. Controller 106 may determine if power converter circuitries 102-1 through 102-4 are successively connected by transitioning switches 201-1 through 201-3 to ON, and measuring the voltage across each of the resistors 204-1 through 204-3 individually. In case there the voltage across each of the resistors 204-1 through 204-3 is below a threshold (e.g., substantially zero), then controller 106 may determine that power converter circuitries 102-1 through 102-4 are successively connected.

As another example, controller 106 may determine a configuration based on measurements. For example, controller 106 may first obtain baseline non-production input voltage measurements (e.g., a voltage level between input terminals 108-i and input terminal 110-i) from power converter circuitries 102-1 through 102-4. Next, controller 106 may control one or more of the power converter circuitries to short the inputs of the one or more power converter circuitries. For example, controller 106 may control power converter circuitry 102-1 to short (e.g., using switches) the input of power converter circuitry 102-1. Controller 106 may then obtain a new set of input voltage measurements from power converter circuitries 102-1 through 102-4. If input voltages to power converter circuitries 102-2 through 102-4 are substantially unchanged, this may indicate that the various power sources are connected to separate power converter circuitries and the first configuration is being used. If input voltages to power converter circuitries 102-2 through 102-4 are now higher compared to baseline voltage measurements, this may indicate that a string of power sources is connected across terminals 108-1 and 110-4, and the second configuration is being used.

Controller 106 may use a combination of the above-described examples to determine the configuration of power device 100 thereby yielding a plurality of results. Controller 106 may verify agreement (e.g., using majority logic) between the different determined results prior to commencing operation, to reduce the probability that an error is present. Controller 106 may, in case of a suspected error (e.g., a first result based on a switch indicates one configuration, but a second result based on measurements indicate another configuration), suppress operation and/or raise an alert.

In step 1703, based on controller 106 determining that the power converter circuitries are not successively connected, the method proceeds to step 1704. Based on controller 106 determining that the power converter circuitries are successively connected the method proceeds to step 1706.

In step 1704, controller 106 controls each of the plurality of power converter circuitries to individually convert power from the respective input terminals 108 and 110 to the respective output terminals 112 and 114, according to a MPPT algorithm aimed at operating at a maximum power point of a corresponding power source (e.g., PV generator 116) connected to the respective input terminals (e.g., a panel power).

In step 1706, controller 106 controls the plurality of power converter circuitries to collectively convert power from a first input terminal (e.g., 108-1) of a first power converter circuitry (e.g., 102-1) and a second input terminal (e.g., input terminal 110-4) of a second power converter circuitry (102-4), at a maximum power point of a power source (e.g., string 117) connected to the plurality of power converter circuitries (e.g., a string power). Collective power conversion may be variously implemented. For example, controller 106 may operate switches 904-1 and 906-2 (as shown in Fig. 10) of each of the power converter circuitries 102-1 through 102-4 in tandem (i.e., may provide a first control signal to switches 404-1 and 406-2 of each of the power converter circuitries), and may operate switches 904-2 and 906-1 (as shown in Fig. 10) of each of the power converter circuitries 102-1 through 102-4 in tandem, to be in the opposite state of switches 904-1 and 906-2. The duty cycle of each of the switches may be selected according to an MPPT algorithm, executed jointly by power converter circuitries 102-1 through 102-4, to track the MPP of a power source (e.g., which may comprise a series-connection of a plurality of power sources). For example, the MPP of the power source (which may comprise a series-connection of a plurality of power sources) may be a joint MPP of the series-connection of PV generators 116-1 through 116-4 (e.g., string 117) connected between terminals 108-1 and 110-4 (e.g., as shown in Figs. 1B and 2B).

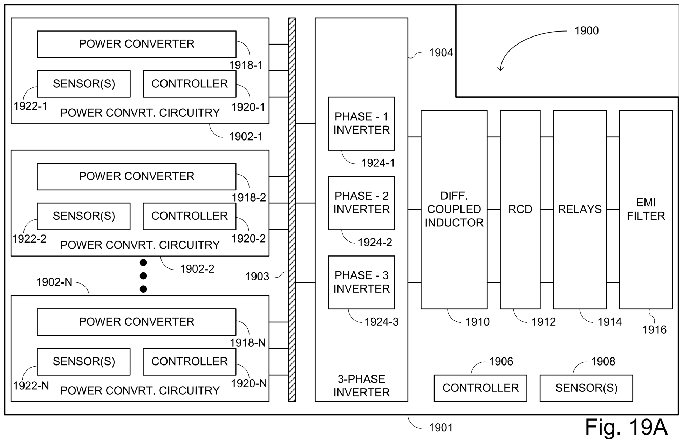

A system according to the disclosed technique, may be housed within a single enclosure to form a power device 100 according to the disclosure herein. A system according to the disclosure herein may be housed within two or more electrically interconnectable enclosures. Reference is now made to Figs. 19A-19C which show an example of a system referenced 1900, according to the disclosure herein. System 1900 includes a plurality of power conversion circuitries 1902-1 through 1902-N, an inverter 1904, a controller 1906 and sensor(s) 1908. System 1900 may further include a differential coupled inductor 1910, a residual current detector (RCD), relays 1914 and an EMI filter 1916. Each one of power conversion circuitries 1902-1 through 1902-N may comprise a corresponding power converter 1918-1 through 1918-N, a corresponding controller 1920-1 through 1920-N, and corresponding sensor(s) 1922-1 through 1922-N. Each one of power converter circuitries may be similar to any one of power converter circuitries 102-1, through 102-7, with the added corresponding controller and sensor(s). Inverter 1904 may be a three phase inverter and may comprise three inverters, phase-1 inverter 1924-1, phase-2 inverter 1924-2, and phase-3 inverter 1924-3. Inverter 1904 may be similar to as described in conjunction with Fig. 15A.

Each of power converter circuitries 1902-1 through 1902-N may be coupled to the input of inverter 1904 via a bus 1906. Bus 1906 may be similar to bus 516 described in Figs. 5E or 5F. The output or inverter 1904 may be coupled to differential coupled inductor 1910. RCD 1912 may be coupled to differential coupled inductor 1910 and to relays 1914. EMI filter 1916 maybe coupled to relays 1914.

According to some examples, system 1900 may comprise a single PCB, which comprises power converter circuitries 1902-1 through 1902-N, inverter 1904 controller 1906 and sensor(s) 1908. According to some examples each one of power converter circuitries 1902-1 through 1902-N may comprise a corresponding PCB which may include the corresponding power converter 1918-i, controller 1920-i, and sensor(s) 1922-i. Inverter 1904 may include a single PCB including phase-1 inverter 1924-1, phase-2 inverter 1924-2, and phase-3 inverter 1924-3, or three PCBs each including a corresponding one of phase-1 inverter 1924-1, phase-2 inverter 1924-2, and phase-3 inverter 1924-3. System 1900 may comprise an additional PCB comprising controller 1906 and other modules such as analog to digital converters, auxiliary power supplies etc. Sensor(s) 1908 may be place at the various PCBs at pertinent locations.

Controller 1906 may control inverter 1904 to convert power from power conversion circuitries 1902-1 through 1902-N using measurements from sensor(s) 1908 as well as may be measurements and parameters provided by controllers 1920-1 through 1920-N. Each one of controllers 1920-1 through 1920-N may controller the corresponding power converter 1918-1 through 1918-N using measurements from the corresponding sensor(s) 1922-1 through 1922-N as well as may be measurements and parameters provided by controller 1906. Controller 1906 and controllers 1920-1 through 1920-N may communicate with each other using a common communication protocol (e.g., RS-485, CANBUS, I2C, and the like).

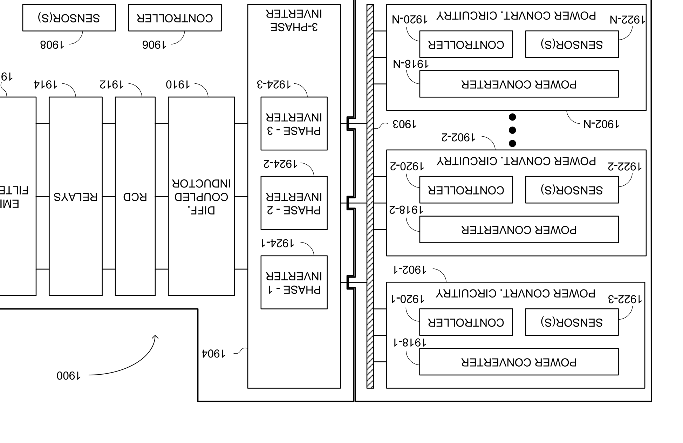

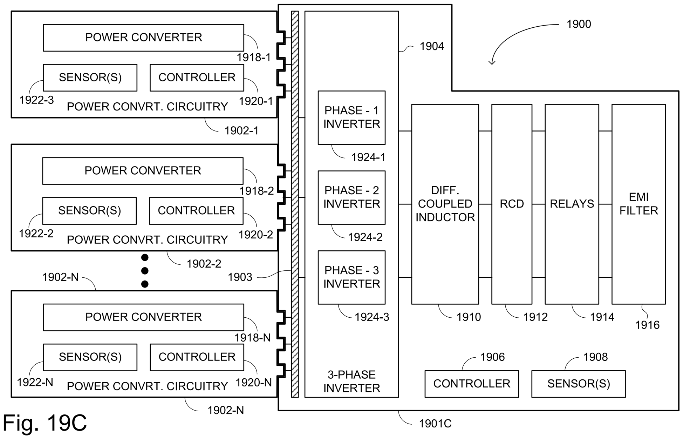

In Fig. 19A, system 1900 is shown to be housed within a single enclosure 1901 to form power device 100 described above in conjunction with Figs. 1A-1C, 2A-2C, 3A-3B, 5A-5F, 6A-6B, 7A-7B. Fig. 19B, system 1900 is shown to be housed within two enclosures 1901A and 1901B where enclosure 1901A includes power conversion circuitries 1902-1 through 1902-N and bus 1903, and enclosure 1901B includes inverter 1904, differential coupled inductor 1910, residual current detector (RCD), relays 1914, and EMI filter 1916. Enclosure 1901A and 1901B may be electrically connectable, for example, via mating connectors (e.g., a standard plug and socket, MC4). Fig. 19C shows each one of power conversion circuitries 1902-1 through 1902-N housed within a corresponding enclosure, and bus 1903, inverter 1904, differential coupled inductor 1910, residual current detector (RCD), relays 1914, and EMI filter 1916 may be housed within enclosure 1901C. The enclosures of power conversion circuitries 1902-1 through 1902-N and enclosure 1901C may be electrically connectable, for example, via mating connectors.

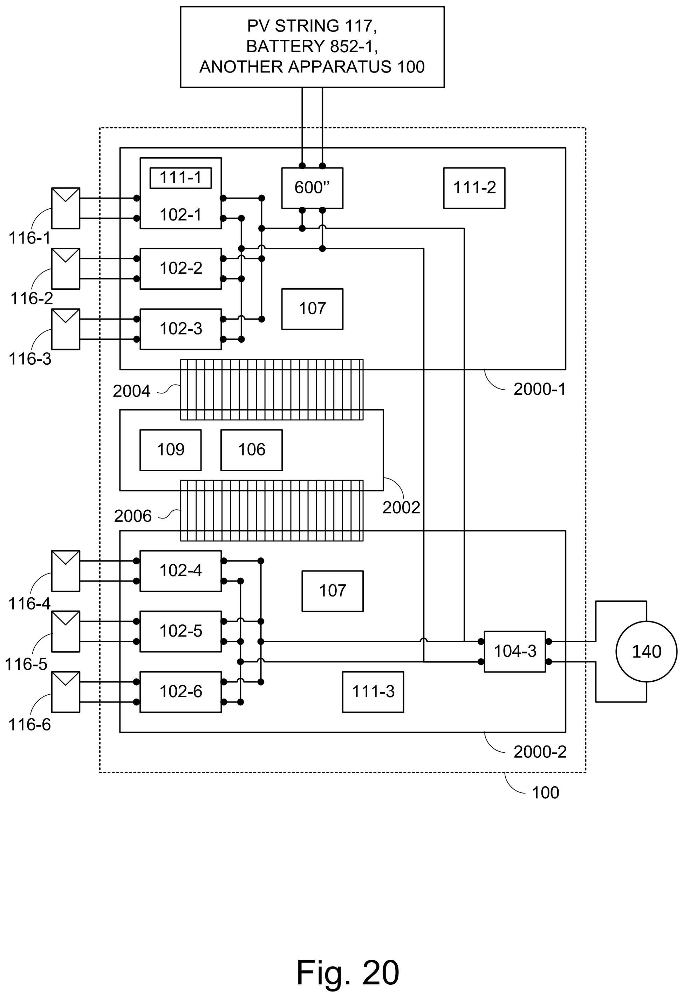

Reference is now made to Figure 20 which shows an example of PCBs layout of system 100 (e.g., as shown in Figure 6C). The layout in Figure 20 includes three PCBs, first power PCB 2000-1, second power PCB 2000-2, and control PCB 2002. First power PCB 2000-1 may include three power converter circuitries 102-1 through 102-3, bidirectional boost converter 600" (Figure 6C), and sensor(s) 107. Second power PCB 2000-2 may include power converter circuitries 102-4 through 102-6, additional power converter circuitry 104, and sensor(s) 107. Control PCB includes controller 106 and communications circuitry 109. First power PCB 2000-1 and control PCB 2002 may be connected via wires 2004. Second power PCB 2000-2 and control PCB 2002 may be connected via wires 2006. Wires 2004 may be for transferring data or power between first power PCB 2000-1 and control PCB 2002. Wires 2006 may be for transferring data or power between second power PCB 2000-2 and control PCB 2002. The PCB configuration of system 100 shown in Figure 20 may enable first power PCB 2000-1, second power PCB 2000-2 and control PCB 2002 to be positioned perpendicular one with respect to the other (e.g., in a shape of a box).

Shown in the example of Figure 20 is an auxiliary power circuitry 111, configured to provide auxiliary power to apparatus 100. Auxiliary power may be the power required for modules in apparatus 100 (e.g., controller 106, communications circuitry 109, gate drivers and the like) to operate. In the example shown in Figure 20, auxiliary power circuitry 111 includes three auxiliary power circuits 111-1, 111-2, and 111-3. However, this should not be considered as limiting. In the example shown in Figure 20, auxiliary power circuits 111-1 is shown to be located in power converter circuitry 102-1. Auxiliary power circuit 111-1 is configured to provide auxiliary power to power converter circuitry 102-1 from PV generator 116-1. However, each one of power converter circuitries 102-1 to 102-6 may include a corresponding auxiliary power circuit 111 providing auxiliary power from the corresponding PV generator 116-1 to 116-6. The example in Figure 20 shows auxiliary 111-2 located on first power PCB 000-1 and configured to provide auxiliary power to apparatus 100, for example, from the parallel connection of the outputs of power converter circuitries 102-1 to 102-6 (e.g., bus 516 - Figure 5A). The example in Figure 20 shows auxiliary 111-3 located on first power PCB 2000-2 and configured to provide auxiliary power to apparatus 100, for example, from a grid (e.g., when load 140 is a grid5A). Wires 2004 and/or wires 2006 may distribute the auxiliary power between the modules in control PCB 2002, first power PCB 2000-1 and second power PCB 2000-2. Thus, auxiliary power circuitry 111 may provide auxiliary power to apparatus 100, even if only a single PV generator of PV generators 116-1 to 116-6 generates power and/or if string 117 or battery 582-1, connected to bidirectional boost converter 600", generates power, and/or if apparatus 100 is connected to a grid.

One or more aspects of the disclosure may be embodied in computer-usable data and computer-executable instructions, such as in one or more program modules, executed by one or more computers or other devices. Generally, program modules include routines, programs, objects, components, data structures, etc. that may perform particular tasks or implement particular abstract data types when executed by a processor in a computer or other device. The computer executable instructions may be stored on a computer readable medium such as a hard disk, optical disk, removable storage media, solid state memory, RAM, etc. As will be appreciated by one of skill in the art, the functionality of the program modules may be combined or distributed as desired in various embodiments. In addition, the functionality may be embodied in whole or in part in firmware or hardware equivalents such as integrated circuits, field programmable gate arrays (FPGA), and the like. Particular data structures may be used to more effectively implement one or more aspects of the disclosure, and such data structures are contemplated within the scope of computer executable instructions and computer-usable data described herein.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

Hereinafter, various characteristics will be highlighted in a set of numbered clauses or paragraphs. These characteristics are not to be interpreted as being limiting but

Clause 1: An apparatus comprising a controller configured to selectively:

control each power converter, of a plurality of power converters, to individually convert power from respective input terminals of the power converter to respective output terminals of the power converter at a maximum power point of a corresponding power source of a plurality of power sources connected to the respective input terminals of the power converter, and control the plurality of power converters to collectively convert power from a first input terminal of a first power converter of the plurality of power converters and a second input terminal of a second power converter of the plurality of power converters, at a maximum power point of a second power source connected to the plurality of power converters.

Clause 2: An apparatus comprising a controller configured to selectively:

control each power converter, of a plurality of power converters, to individually convert power from respective input terminals of the power converter to respective output terminals of the power converter at a maximum power point of a corresponding power source of a plurality of power sources connected to the respective input terminals of the power converter, and control the plurality of power converters to collectively convert power, from a first input terminal of a first power converter of the plurality of power converters and a second input terminal of a second power converter of the plurality of power converters, at a collective maximum power point of the plurality of power sources.

Clause 3: An apparatus comprising a controller configured to selectively:

control each power converter of a plurality of power converters to individually convert power from respective input terminals of the power converter to respective output terminals of the power converter at a maximum power point of a corresponding power source of a plurality of power sources connected to the respective input terminals of the power converter, and control the plurality of power converters to collectively convert power from the first input terminal of a first power converter in a successive connection of the plurality of power converters and the second input terminal of a second power converter in the successive connection of the plurality of power converters, at a maximum power point of a second power source connected to the successive connection.

Clause 4: A controller comprising:

a processor; and a memory storing computer readable instructions that when executed by the processor cause the controller to selectively:

control each power converter, of a plurality of power converters, to convert power from respective input terminals of the power converter to respective output terminals of the power converter at a maximum power point of a corresponding power source of a plurality of power sources connected to the respective input terminals of the power converter, and control the plurality of power converters to collectively convert power from a first input terminal of a first power converter of the plurality of power converters and a second input terminal of a second power converter of the plurality of power converters at a maximum power point of a second power source connected to the plurality of power converters.

Clause 5: A controller comprising:

a processor; and a memory storing computer readable instructions, the computer readable instructions causing, when executed by the processor, the controller to selectively:

control each power converter, of a plurality of power converters, to convert power from respective input terminals of the power converter to respective output terminals of the power converter at a maximum power point of a corresponding power source of a plurality of power sources connected to the respective input terminals of the power converter, and control the plurality of power converters to collectively convert power, from a first input terminal of a first power converter of the plurality of power converters and a second input terminal of a second power converter of the plurality of power converters, at a collective maximum power point of the plurality of power sources.

Clause 6: A controller comprising:

a processor; and a memory storing computer readable instructions, the computer readable instructions causing, when executed by the processor, the controller to selectively:

control each power converter, of a plurality of power converters, to convert power from respective input terminals of the power converter to respective output terminals of the power converter at a maximum power point of a corresponding power source of a plurality of power sources connected to the respective input terminals of the power converter, and

control the plurality of power converters to collectively convert power from the first input terminal of a first power converter in a successive connection of the plurality of power converters and the second input terminal of a second power converter in the successive connection of the plurality of power converters, at a collective maximum power point of the plurality of power sources coupled to the successive connection.

Clause 7: An apparatus comprising:
a plurality of power converters, each power converter of the plurality of power converters comprising:
input terminals comprising:

a first input terminal, and
a second input terminal,
output terminals; and
a controller configured to:

in a first mode, control each power converter of the plurality of power converters to convert power from the input terminals to the output terminals at a maximum power point of a corresponding power source connected to the input terminals of each power converter; and
in a second mode, control the plurality of power converters to collectively convert power from the first input terminal of a first power converter of the plurality of power converters and the second input terminal of a second power converter of the plurality of power converters, at a maximum power point of a second power source connected to the plurality of power converters, wherein, in the second mode, the second input terminal of one power converter of the plurality of power converters is coupled to the first input terminal of another power converter of the plurality of power converters.

Clause 8: An apparatus comprising:
a plurality of power converters, each power converter of the plurality of power converters comprising:
input terminals comprising:

a first input terminal, and
a second input terminal,
output terminals; and
a controller configured to selectively:

control each of the plurality of power converters to convert power from the respective input terminals to the respective output terminals at a maximum power point of a corresponding power source connected to the respective input terminals of each power converter, and

control the plurality of power converters to collectively convert power from the first input terminal of a first power converter in a successive connection of the plurality of power converters and the second input terminal of a second power converter in the successive connection of the plurality of power converters, at a maximum power point of a second power source connected to the successive connection.

Clause 9: The apparatus of clause 8, wherein, the successive connection comprises the second input terminal of one power converter of the plurality of power converters coupled to the first input terminal of another power converter of the plurality of power converters.

Clause 10: An apparatus comprising:
a plurality of power converters, each power converter of the plurality of power converters comprising:
input terminals comprising:

a positive input terminal; and
a negative input terminal;
output terminals; and
a power circuit configured to convert power from the input terminals to the output terminals;
a second power converter, comprising a second power circuit, coupled to each output terminals of the plurality of power converters, and configured to convert power from the plurality of power converters; and
a controller configured to control the plurality of power converters and the second power converter,
wherein, in a first configuration:

the input terminals of each power converter of the plurality of power converters are configured to be coupled to a corresponding power source of a plurality of power source; and

the controller is configured to control the plurality of power converters by controlling each power circuit to convert power from the input terminals to the output terminals at a maximum power point of the corresponding power source,

wherein in a second configuration:

the positive input terminal of one power converter of the plurality of power converters is coupled to the negative input terminal of another power converter of the plurality of power converters, forming a successive connection of power converters;

the positive input terminal of a first power converter in the successive connection of power converters and the negative input terminal of a last power converter in the successive connection of power converters are configured to be coupled to a second power source; and

the controller is configured to control the successive connection of power converters by controlling the power circuit of each power converter in a successive connection of power converters to convert power from the positive input terminal of the first power converter in the successive connection of power converters and the negative input terminal of the last power converter in the successive connection of power converters at a maximum power point of the second power source.

Clause 11: The apparatus of any one of clauses 1-8, and 10 wherein each power converter of the plurality of power converters is a DC-DC converter.

Clause 12: The apparatus of clauses 1-8, 10, and 11, wherein at least one of the plurality of power converters is a bidirectional power converter configured to convert power:

from the input terminals to the output terminals; or

from the output terminals to the input terminals.

Clause 13: The apparatus of clauses 1-8, 10, and 11, wherein the second power converter comprises second input terminals and second output terminals,

wherein the second input terminals are coupled to the output terminals of the plurality of power converters,

wherein the second power converter is one of:

a DC-to-AC converter; or
a DC-DC converter.

Clause 14: The apparatus of clause 1, wherein the second power converter is a bidirectional power converter.

Clause 15: The apparatus of clause 1, wherein the second power converter is further coupled with a load.

Clause 16: The apparatus of clause 15, wherein the load is a grid.

Clause 17: The apparatus of any one of clauses 1-8 and 10, wherein each power converter of the plurality of power converters is a DC-to-AC converter.

Clause 18: The apparatus of clause 17, further comprising a second power converter coupled to the output terminals of the plurality of power converters, wherein the second power converter is one of:

an AC-AC converter; or
an AC-to-DC converter.

Clause 19: The apparatus of any one of clauses 1-8 and 10, wherein each power converter of the plurality of power converters is an isolated power converter.

Clause 20: The apparatus of any one of clauses 1-8 and 10, further comprising a plurality of switches, each connected between the second input terminal of one converter of the plurality of power converters and the first input terminal of another converter of the plurality of power converters,

wherein, when the controller controls each power converter of the plurality of power converters, the plurality of switches are in a non-conducting state, and

wherein when the controller controls the plurality of power converters to collectively convert power, the plurality of switches are in a conducting state.

Clause 21: The apparatus of clause 20, wherein the controller controls the plurality of switches to transition between the non-conducting state to the conducting state.

Clause 22: The apparatus of any one of clauses 20-21, further comprising a selection switch configured to control the plurality of switches to transition between the non-conducting state to the conducting state.

Clause 23: The apparatus of clause 22, wherein the selection switch is one of:

a mechanical switch; or
an electromechanical switch.

Clause 24: The apparatus of any one of clauses 1-8 and 10, wherein each power converter of the plurality of power converters further comprises a power circuit configured to convert power from the input terminals to the output terminals.

Clause 25: The apparatus of any one of clauses 1, 3, 4, 7, 8, and 10, wherein the second power source comprises the plurality of power sources, and wherein the controller controls the plurality of power converters to collectively convert power at a collective maximum power point of the plurality of power source.

Clause 26: The apparatus of any one of cluases 1-8 and 10, wherein the respective input terminals of the power converters are coupled to corresponding cables of sufficient length which facilitate a successive connection of the power converters.

Clause 27: A system comprising:

at least one apparatus comprising:
a plurality of power converters, each power converter of the plurality of power converters comprising:

input terminals comprising:

a first input terminal; and
a second input terminal;

output terminals; and

a controller configured to selectively:

based on a first configuration, control each of the plurality of power converters to convert power from the respective input terminals to the respective output terminals at a maximum power point of a corresponding power source connected to the respective input terminals of each power converter, and
based on a second configuration, control the plurality of power converters to collectively convert power from the first input terminal of a first power converter in a successive connection of the plurality of power converters and the second input terminal of a second power converter in the successive connection of the plurality of power converters, at a maximum power point of a second power source connected to the successive connection.

Clause 28: The apparatus of clause 27, further comprising a second power converter, the second power converter comprises second input terminals and second output terminals,

wherein the second input terminals are coupled to the output terminals of the plurality of power converters,
wherein the second power converter is one of:

a DC-to-AC converter, or
a DC-DC converter.

Clause 29: The system of clause 28, wherein the second power converter is a bidirectional power converter.

Clause 30: The system of clause 29, wherein a power converter of the plurality of power converters is a bidirectional converter configured to be connected to one of:

a corresponding power source,
a corresponding load, or
a storage device.

Clause 31: The system of any one of clauses 28-30, wherein the second power converter is further coupled with a load.

Clause 32: The system of any one of clauses 28-31, wherein the load is a grid.

Clause 33: The system of any one of clauses 28-32, wherein the second input terminals comprise two terminals.

Clause 34: The system of any one of clauses 28-33, wherein the second input terminals comprise three terminals.

Clause 35: The system of any one of clauses 28-34, wherein the system comprises at least two apparatuses, and
wherein the output terminals of each second power converter in each apparatus are connected in parallel.

Clause 36: The system of any one of clauses 27-35, wherein, in a first configuration, the input terminals of each power converter of the plurality of power converters are configured to be coupled to a corresponding power source of a plurality of power source, and wherein in a second configuration:

the positive input terminal of one power converter of the plurality of power converters is coupled to the negative input terminal of another power converter of the plurality of power converters, forming a successive connection of power converters; and

the positive input terminal of a first power converter in the successive connection of power converters and the negative input terminal of a last power converter in the successive connection of power converters are configured to be coupled to a second power source.

Clause 37: The system of clause 36, wherein the system comprises at least two apparatuses, and wherein, the negative input terminal of a last power converter in a first apparatus of the at least two apparatuses is coupled to a positive input terminal of a first power converter in a second apparatus of the at least two apparatuses, and wherein the positive input terminal of a first power convert in the first apparatus and the negative input terminal of the last power converter in the second apparatus are configured to be coupled to a power source.

Clause 38: The system of clause 37, further comprising a central controller, configured to provide each apparatus of with system output power, and wherein the controller of each apparatus is configured to control the input voltage to the apparatus based on the system output power.

Clause 39: The system of any one of clauses 37-38, wherein the controller of one apparatus of the at least two apparatus is configured to control the input voltage to the one apparatus at least based on power parameters received from the second apparatus.

Clause 40: The system of any one of clauses 27-39, wherein the output terminals comprise two terminals.

Clause 41: The system of any one of clauses 27-40, wherein the output terminals comprise three terminals.

Clause 42: A method comprising:

controlling each power converter, of a plurality of power converters, to convert power from respective input terminals of each power converter to respective output terminals of each power converter at a maximum power point of a corresponding power source of a plurality of power sources connected to the respective input terminals of each power converter, and controlling the plurality of power converters to collectively convert power from a first input terminal of a first power converter of the plurality of power converters and a second input terminal of a second power converter of the plurality of power converters at a maximum power point of a second power source connected to the plurality of power converters.

Clause 43: A method comprising:

control each power converter, of a plurality of power converters, to convert power from respective input terminals of each power converter to respective output terminals of each power converter at a maximum power point of a corresponding power source of a plurality of power sources connected to the respective input terminals of each power converter, and control the plurality of power converters to collectively convert power, from a first input terminal of a first power converter of the plurality of power converters and a second input terminal of a second power converter of the plurality of power converters, at a collective maximum power point of the plurality of power sources.

Clause 44: A method comprising:
control each power converter, of a plurality of power converters, to convert power from respective input terminals of each power converter to respective output terminals of each power converter at a maximum power point of a corresponding power source of a plurality of power sources connected to the respective input terminals of each power converter, and

Clause 45: control the plurality of power converters to collectively convert power from the first input terminal of a first power converter in a successive connection of the plurality of power converters and the second input terminal of a second power converter in the successive connection of the plurality of power converters, at a collective maximum power point of the plurality of power sources coupled to the successive connection.

Clause 46: An apparatus comprising:
a plurality of power converter circuitries, each power converter circuitry of the plurality of power converter circuitries comprising:

first input terminals configured to be connected to a corresponding PV generator; first output terminals; and a DC-to-DC power converter configured to convert power from the first input terminals to the first output terminals, wherein the first output terminals are isolated from the first input terminals, and wherein the first output terminals of the plurality of power converter circuitries are connected in parallel, forming a parallel connection of the first output terminals. a controller configured to control the plurality of power converters to convert power from the first input terminals to the first output terminals.

Clause 47: The apparatus of clause 46, wherein at least one of the plurality of power converter circuitries is a bidirectional power converter circuitry, configured to convert power:

from the first input terminals to the first output terminals; or
from the first output terminals to the first input terminals.

Clause 48: The apparatus of clause 47, wherein the first input terminals of the at least one bidirectional power converter circuitry are configured to be connected to a storage device. Clause 49: The apparatus of any one of clauses 47-48, wherein the first input terminals of the at least one bidirectional power converter circuitry are configured to be connected to a string of serially connected PV generators.

Clause 50: The apparatus of any one of clauses 47-49, wherein the at least one bidirectional power converter circuitry is a bidirectional boost converter.

Clause 51: The apparatus of any one of clauses 46-50, wherein at least one power converter circuitry of the plurality of power converter circuitries is configured to be connected to a string of serially connected PV generators.

Clause 52: The apparatus of any one of clauses 46-51, further comprising a second power converter circuitry comprising:

second input terminals configured to be coupled to the parallel connection of the first output terminals;
second output terminals configured to be connected to a load; and
at least one second power converter, configured to convert power from the plurality of power converter circuitries to the second output terminals,
wherein the controller is configured to control the second power converter.

Clause 53: The apparatus of clause 52, wherein the at least one second power converter is a DC-to-AC.

Clause 54: The apparatus of clause 53, wherein the at least one second power converter comprises three DC-to-AC power converters.

Clause 55: The apparatus of clause 54, wherein each of the three power converters is a neutral point clamp power converter.

Clause 56: The apparatus of any one of clauses 52-55, wherein the at least one second power converter is a bidirectional power converter.

Clause 57: The apparatus of any one of clauses 52-56, wherein the load is a grid.

Clause 58: The apparatus of any one of clauses 56-57, wherein the load is premises.

Clause 59: The apparatus of any one of clauses 46-58, wherein the first power converter circuitry comprises a boost converter connected to the first input terminals, and a resonant converter.

Clause 60: The apparatus of clause 59, wherein the resonant converter circuitry comprises an isolating transformer.

Clause 61: The apparatus of any one of clauses 59-60, wherein the resonant converter is an LLC converter.

Clause 62: The apparatus of any one of clauses 59-61, wherein the first input terminals are reference to a first reference potential, and the first output terminals are referenced to a second reference potential.

Clause 63: The apparatus of any one of clauses 46-62, wherein the controller comprises:

a processor; and
a memory storing computer readable instructions that when executed by the processor cause the controller to control each power converter circuitry, of the plurality of power converter circuitries, to convert power from the corresponding first input terminals to the corresponding first output terminals, at a maximum power point of the corresponding PV generator.

Clause 64: The apparatus of any one of clauses 46-63, wherein, in a first configuration:

the input terminals of each power converter circuitry of the plurality of power converter circuitries are configured to be coupled to the corresponding PV generator of a plurality of PV generators; and
wherein in a second configuration:

a positive terminal of the first input terminals of one power converter circuitry of the plurality of power converter circuitry is coupled to a negative input terminal of the first input terminals of another power converter circuitry of the plurality of power converters, forming a successive connection of power converters; and
a positive terminal of the first input terminals of a first power converter circuitry in the successive connection of power converters and a positive terminal of the first input terminals a last power converter circuitry in the successive connection of power converters are configured to be coupled to a string of serially connected power generators.

Clause 65: The apparatus of any one of clauses 46-64, further comprising auxiliary power circuitry configured to receive power from one or more PV generators, and configured to provide auxiliary power from at least one PV generator or the one or more PV generators.

**Claims**

1. An apparatus comprising:

    a plurality of power converter circuitries, each power converter circuitry of the plurality of power converter circuitries comprising:

      first input terminals configured to be connected to a corresponding PV generator;
      first output terminals; and
      a DC-to-DC power converter configured to convert power from the first input terminals to the first output terminals,
      wherein the first output terminals are isolated from the first input terminals, and
      wherein the first output terminals of the plurality of power converter circuitries are connected in parallel, forming a parallel connection of the first output terminals; and

    a controller configured to control the plurality of power converters to convert power from the first input terminals to the first output terminals.

2. The apparatus of claim 1, wherein the plurality of power converter circuitries comprises at least one bidirectional power converter circuitry, configured to convert power:

    from the first input terminals to the first output terminals; or
    from the first output terminals to the first input terminals.

3. The apparatus of claim 2, wherein the first input terminals of the at least one bidirectional power converter circuitry are configured to be connected to a storage device.

4. The apparatus of any of claims 2-3, wherein the first input terminals of the at least one bidirectional power converter circuitry are configured to be connected to a string of serially connected PV generators.

5. The apparatus of any of claims 1-4, wherein at least one power converter circuitry of the plurality of power converter circuitries is configured to be connected to a string of serially connected PV generators.

6. The apparatus of any of claims 1-5, further comprising a second power converter circuitry comprising:

    second input terminals configured to be coupled to the parallel connection of the first output terminals;
    second output terminals configured to be connected to a load; and
    at least one second power converter, configured to convert power from the plurality of power converter circuitries to the second output terminals,
    wherein the controller is configured to control the second power converter.

7. The apparatus of claim 6, wherein the at least one second power converter is a DC-to-AC.

8. The apparatus of any of claims 6-7, wherein the at least one second power converter comprises three DC-to-AC power converters.

9. The apparatus of any of claims 1-8, wherein the first power converter circuitry comprises a boost converter connected to the first input terminals, and a resonant converter.

10. The apparatus of claim 9, wherein the resonant converter comprises an isolating transformer.

11. The apparatus of claim 9, wherein the resonant converter is an LLC converter.

12. The apparatus of any of claims 1-11, wherein the first input terminals are referenced to a first reference potential, and the first output terminals are referenced to a second reference potential.

13. The apparatus of any of claims 1-12, wherein the controller comprises:

    a processor; and
    a memory storing computer readable instructions that when executed by the processor cause the controller to control each power converter circuitry, of the plurality of power converter circuitries, to convert power from the corresponding first input terminals to the corresponding first output terminals, at a maximum power point of the corresponding PV generator.

14. The apparatus of any of claims 1-13, wherein, in a first configuration:
the input terminals of each power converter circuitry of the plurality of power converter circuitries are configured to be coupled to the corresponding PV generator of a plurality of PV generators; and wherein in a second configuration:

a positive terminal of the first input terminals of one power converter circuitry of the plurality of power converter circuitry is coupled to a negative input terminal of the first input terminals of another power converter circuitry of the plurality of power converters, forming a successive connection of power converters; and
a positive terminal of the first input terminals of a first power converter circuitry in the successive connection of power converters and a positive terminal of the first input terminals of a last power converter circuitry in the successive connection of power converters are configured to be coupled to a string of serially connected power generators.

15. The apparatus of any of claims 1-14, further comprising auxiliary power circuitry configured to receive power from one or more PV generators, and configured to provide auxiliary power from at least one PV generator or the one or more PV generators.

Fig. 1A

Fig. 1B

Fig. 1C

Fig. 2A

Fig. 2B

Fig. 2C

Fig. 3A

Fig. 3B

Fig. 4A

Fig. 4B

Fig. 4C

Fig. 4D

Fig. 4E

Fig. 5A

Fig. 5B

Fig. 5C

Fig. 5D

Fig. 5E

Fig. 5F

Fig. 6A

Fig. 6B

Fig. 6C

Fig. 7A

Fig. 7B

Fig. 7C

Fig. 8

Fig. 9A

Fig. 9B

Fig. 9C

Fig. 10

Fig. 11

Fig. 12

Fig. 13

Fig. 14

Fig. 15A

Fig. 15B

Fig. 16

Fig. 17

DETERMINE A CONFIGURATION OF AN APPARATUS INCLUDING A PLURALITY OF POWER CONVERTERS

1702

1st ——— $1^{ST}$ CONFIGURATION OR $2^{ND}$ CONFIGURATION? ——— 2nd

1703

CONTROL EACH OF THE PLURALITY OF POWER CONVERTERS TO CONVERT POWER FROM THE RESPECTIVE INPUT TERMINALS TO THE RESPECTIVE OUTPUT TERMINALS AT A MAXIMUM POWER POINT OF A CORRESPONDING POWER SOURCE CONNECTED TO THE RESPECTIVE INPUT TERMINALS

1704

CONTROL THE PLURALITY OF POWER CONVERTERS TO COLLECTIVELY CONVERT POWER FROM A FIRST INPUT TERMINAL OF A FIRST POWER CONVERTER AND A SECOND INPUT TERMINAL OF A SECOND POWER CONVERTER, AT A MAXIMUM POWER POINT OF A POWER SOURCE CONNECTED TO THE PLURALITY OF CONVERTERS

1706

1700

Fig. 18

POWER CONVERTER
1918-1

SENSOR(S) | CONTROLLER
1922-1 | POWER CONVRT. CIRCUITRY | 1920-1
1902-1

POWER CONVERTER
1918-2

SENSOR(S) | CONTROLLER
1922-2 | POWER CONVRT. CIRCUITRY | 1920-2
1902-2 | 1903

1902-N

POWER CONVERTER
1918-N

SENSOR(S) | CONTROLLER
1922-N | POWER CONVRT. CIRCUITRY | 1920-N

PHASE - 1 INVERTER
1924-1

PHASE - 2 INVERTER
1924-2

PHASE - 3 INVERTER
1924-3

3-PHASE INVERTER

1904

1900

DIFF. COUPLED INDUCTOR | RCD | RELAYS | EMI FILTER
1910 | 1912 | 1914 | 1916

1906 | 1908
CONTROLLER | SENSOR(S)

1901

Fig. 19A

69

Fig. 19C

Fig. 20

Europäisches
Patentamt
European
Patent Office
Office européen
des brevets

# EUROPEAN SEARCH REPORT

**Application Number**

EP 25 21 6995

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/200709 A1 (KIRCHNER PETER DANIEL [US] ET AL) 8 August 2013 (2013-08-08) | 1,4-8, 12,15 | INV. H02J3/38 H02M1/00 |
| A | * paragraphs [0030] - [0035]; figure 3 * | 14 | |
| X | US 2024/128890 A1 (ZHANG LU [CN] ET AL) 18 April 2024 (2024-04-18) | 1,2,4-8, 12,13,15 | |
| A | * paragraphs [0002] - [0005], [0008], [0015], [0029] - [0033], [0051]; figures 1-3 * | 14 | |
| X | VAN DER HAM A. J. ET AL: "A distributed maximum power point tracking system for solar electric vehicles", 2017 19TH EUROPEAN CONFERENCE ON POWER ELECTRONICS AND APPLICATIONS (EPE'17 ECCE EUROPE) JOINTLY OWNED IEEE-PELS AND EPE ASSOCIATION, 11 September 2017 (2017-09-11), XP033250544, DOI: 10.23919/EPE17ECCEEUROPE.2017.8099162 [retrieved on 2017-11-06] | 1,2,4,5, 9-13 | |
| Y | * pages 1,2,4; figures 1c,2,3,4 * | 3 | |
| A | | 14 | |
| Y | JEAN-PIERRE GARRY ET AL: "A Three-Port LLC Resonant Converter for Photovoltaic-Battery Hybrid System", 2019 IEEE TRANSPORTATION ELECTRIFICATION CONFERENCE AND EXPO (ITEC) IEEE, 19 June 2019 (2019-06-19), pages 1-6, XP033592532, DOI: 10.1109/ITEC.2019.8790468 [retrieved on 2019-08-06] * figure 1 * | 3 | |

**TECHNICAL FIELDS SEARCHED (IPC)**

H02J
H02M

The present search report has been drawn up for all claims

| Place of search | Date of completion of the search | Examiner |
|---|---|---|
| Munich | 16 April 2026 | Hanisch, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................................................

& : member of the same patent family, corresponding document

EPO FORM 1503 03.82 (P4C01)

## ANNEX TO THE EUROPEAN SEARCH REPORT
## ON EUROPEAN PATENT APPLICATION NO.

EP 25 21 6995

This annex lists the patent family members relating to the patent documents cited in the above-mentioned European search report.
The members are as contained in the European Patent Office EDP file on
The European Patent Office is in no way liable for these particulars which are merely given for the purpose of information.

16-04-2026

| Patent document cited in search report | Publication date | Patent family member(s) | Publication date |
|---|---|---|---|
| US 2013200709 A1 | 08-08-2013 | DE 112013000480 T5 | 18-09-2014 |
| | | GB 2514036 A | 12-11-2014 |
| | | US 2013200709 A1 | 08-08-2013 |
| | | WO 2013116289 A1 | 08-08-2013 |
| US 2024128890 A1 | 18-04-2024 | AU 2023248060 A1 | 02-05-2024 |
| | | CN 218449870 U | 03-02-2023 |
| | | EP 4354720 A1 | 17-04-2024 |
| | | US 2024128890 A1 | 18-04-2024 |

EPO FORM P0459

For more details about this annex : see Official Journal of the European Patent Office, No. 12/82

**REFERENCES CITED IN THE DESCRIPTION**

**Patent documents cited in the description**

- US 63722250

- US 63756767